(19)

Europäisches
Patentamt
European
Patent Office
Office européen
des brevets

(11) **EP 1 933 124 A1**

(12) **EUROPEAN PATENT APPLICATION**
published in accordance with Art. 153(4) EPC

(43) Date of publication:
**18.06.2008 Bulletin 2008/25**

(51) Int Cl.:
***G01N 1/36*** *(2006.01)* ***G01N 35/02*** *(2006.01)*
***B01F 11/02*** *(2006.01)*

(21) Application number: **05790357.7**

(22) Date of filing: **05.10.2005**

(86) International application number:
**PCT/JP2005/018467**

(87) International publication number:
**WO 2007/043147 (19.04.2007 Gazette 2007/16)**

(84) Designated Contracting States:
**DE FR GB**

(71) Applicants:
• **Olympus Corporation**
**Tokyo 151-0072 (JP)**
• **Advalytix AG**
**85649 Brunnthal (DE)**

(72) Inventor: **MURAKAMI, Miyuki**
**Tokyo 151-0072 (JP)**

(74) Representative: **von Hellfeld, Axel et al**
**Wuesthoff & Wuesthoff**
**Patent- und Rechtsanwälte**
**Schweigerstrasse 2**
**81541 München (DE)**

(54) **STIRRING VESSEL, STIRRING METHOD, STIRRER, ANALYZER PROVIDED WITH STIRRER**

(57) The present invention aims to provide a stirring vessel, a stirring method, a stirrer and an analyzer provided with the stirrer, in which an acoustic flow can reach a gas/liquid interface, whereby a liquid can be stirred over a wide range from the bottom part of the vessel to the gas/liquid interface. The present invention provides a stirring vessel, a stirring method, a stirrer and an analyzer provided with the stirrer, which stir a retained liquid with an acoustic wave. A stirring vessel (5) has at least one surface acoustic wave device (23), which emits an acoustic wave into a liquid (Ls), provided to the stirring vessel (5) as deviated. The stirring method for stirring a liquid with an acoustic wave includes a step of asymmetrically emitting an acoustic wave into a liquid, and a step of generating an asymmetric flow into the liquid by the asymmetric acoustic wave, wherein the liquid is stirred with the asymmetric flow.

**FIG.6**

EP 1 933 124 A1

## Description

TECHNICAL FIELD

The present invention relates to a stirring vessel, a stirring method, a stirrer, and an analyzer provided with the stirrer.

BACKGROUND ART

As a stirrer used in an analyzer for stirring a liquid by an acoustic wave, there has conventionally been known, for example, a stirrer in which at least one acoustic wave generating means for generating an ultrasonic wave of not less than 10 MHz is provided at a bottom part of a vessel retaining a liquid, the ultrasonic wave is incident into the liquid through a solid material arranged in the propagating direction of the ultrasonic wave so as to produce an acoustic flow, and the liquid is stirred by means of the acoustic flow (e.g., see Patent Document 1).
Patent Document 1: Germany Patent No. 10325307

DISCLOSURE OF INVENTION

PROBLEM TO BE SOLVED BY THE INVENTION

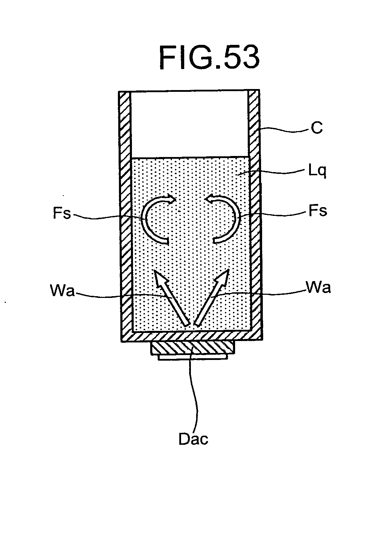

As shown in FIG. 53, an acoustic wave Wa produced by acoustic wave generating means Dac is incident in the liquid as tilted with respect to the inner surface of a vessel C as shown arrows. Therefore, when the vessel is very small or thin having a capacity of several nL to several ten μL, the acoustic flow produced by the acoustic wave is reflected by the inner surface. As a result, a liquid Lq in the vessel is sometimes prevented from being mixed due to the acoustic flow Fs, since two symmetrical acoustic flows Fs reflected by the side faces collide with each other to be canceled. If the liquid Lq has a great viscosity coefficient, the attenuation of the acoustic wave due to the absorption is significant, so that the acoustic flow Fs cannot reach a gas/liquid interface, and hence, there may be the case in which the liquid Lq cannot be completely stirred.
The present invention is accomplished in view of the above, and aims to provide a stirring vessel, a stirring method, a stirrer, and an analyzer provided with the stirrer, in which an acoustic flow can reach a gas/liquid interface, whereby a liquid can be stirred over a wide range from the bottom part of the vessel to the gas/liquid interface.

MEANS FOR SOLVING PROBLEM

In order to solve the foregoing problem and attain the object, a stirring vessel according to claim 1 is a stirring vessel for stirring a retained liquid by means of an acoustic wave, wherein at least one acoustic wave generating unit that emits an acoustic wave into the liquid is provided as deviated on the stirring vessel.
According to claim 2, in the stirring vessel described in the above-mentioned invention, the acoustic wave generating unit includes an acoustic chip and an acoustic matching layer, wherein the acoustic chip produces a surface acoustic wave.
According to claim 3, in the stirring vessel described in the above-mentioned invention, the acoustic wave generating unit emits the acoustic wave into the liquid from an emission area located at a vertical upper position or a vertical lower position of an inner side face of the stirring vessel or at a horizontal outer position of the inner bottom face.
According to claim 4, in the stirring vessel described in the above-mentioned invention, the emission area is present on a same plane as the inner side face or the inner bottom face of the stirring vessel or a different plane.
According to claim 5, in the stirring vessel described in the above-mentioned invention, an effective dimension of the acoustic wave generating unit in a horizontal direction or a vertical direction in a cross section passing through the acoustic wave generating unit in the horizontal direction or vertical direction is set to be not more than a half a dimension of the liquid present on the cross section.
According to claim 6, in the stirring vessel described in the above-mentioned invention, an effective dimension of the acoustic wave generating unit in a cross section passing through the acoustic wave generating unit in a direction orthogonal to an acoustic wave generating direction is set to be not more than a third of a dimension of the liquid present on the cross section, and to be not less than a product of a half wavelength of the emitted acoustic wave and a number of the acoustic wave generating units.
According to claim 7, in the stirring vessel described in the above-mentioned invention, two or more acoustic wave generating units are provided to the stirring vessel.
According to claim 8, in the stirring vessel described in the above-mentioned invention, the two or more acoustic wave generating units are arranged to be asymmetric with respect to the liquid.
According to claim 9, in the stirring vessel described in the above-mentioned invention, the two or more acoustic wave generating units emit an acoustic wave in the different directions from odd or even numbers of emission areas.
According to claim 10, in the stirring vessel described in the above-mentioned invention, the odd or even numbers of emission areas are present on a same plane as an inner side face or an inner bottom face of the stirring vessel or different planes.
According to claim 11, in the stirring vessel described in the above-mentioned invention, the emission areas are present on a diagonal line or a diameter of an inner bottom face.

According to claim 12, in the stirring vessel described in the above-mentioned invention, the two or more acoustic wave generating units are provided on a same plane as a side face or a bottom face of the stirring vessel or on different planes.

According to claim 13, in the stirring vessel described in the above-mentioned invention, the two or more acoustic wave generating units are provided at different heights in a vertical direction on a plane same as a side face or a bottom face of the stirring vessel or on different planes.

According to claim 14, in the stirring vessel described in the above-mentioned invention, in the two or more acoustic wave generating units, a center frequency of the acoustic wave generating unit arranged at a lower part in the vertical direction is set to be lower than a center frequency of the acoustic wave generating unit arranged at an upper part in the vertical direction.

According to claim 15, in the stirring vessel described in the above-mentioned invention, the acoustic wave generating unit is provided at an outer face of the stirring vessel with an end portion thereof arranged at a position lower than an inner bottom face in a vertical direction and at a position outer than the inner side face in a horizontal direction.

According to claim 16, in the stirring vessel described in the above-mentioned invention, driving efficiencies, for a same signal, of the two or more acoustic wave generating units are set to be different from one another.

According to claim 17, in the stirring vessel described in the above-mentioned invention, the two or more acoustic wave generating units have a same driving efficiency and are driven by different signals.

According to claim 18, in the stirring vessel described in the above-mentioned invention, the two or more acoustic wave generating units are set to be different in at least one of center frequency, band width, and resonance characteristic.

According to claim 19, in the stirring vessel described in the above-mentioned invention, in the two or more acoustic wave generating units, a spaced distance between the adjacent acoustic wave generating units is set to be not less than a half wavelength of a wavelength of the acoustic wave generating unit that produces an acoustic wave having a long wavelength.

According to claim 20, in the stirring vessel described in the above-mentioned invention, in the two or more acoustic wave generating units, a spaced distance between the adjacent acoustic wave generating units, which are simultaneously operated, in a direction along a surface on which the acoustic wave generating units are mounted is set to be not less than a sum of acoustic wave arrival distances of the respective acoustic wave generating units in a direction along the mounting surface.

According to claim 21, in the stirring vessel described in the above-mentioned invention, the two or more acoustic wave generating units have a common power receiving unit for receiving power.

According to claim 22, in the stirring vessel described in the above-mentioned invention, the acoustic wave generating unit is provided at a position in a vertical direction lower than a position where a gas/liquid interface of the liquid comes in contact with an inner side face of the stirring vessel.

According to claim 23, in the stirring vessel described in the above-mentioned invention, the acoustic wave generating unit, among the two or more acoustic wave generating units, provided between a position where a gas/liquid interface of the liquid comes in contact with an inner side face of the stirring vessel and a lowermost part of the gas/liquid interface is set to satisfy a relationship for a wavelength $\lambda$ of the emitted acoustic wave: $\lambda < Hd \cdot \tan\theta$ where a dimension in a vertical direction is Hd, and a contact angle of the gas/liquid interface of the liquid and the inner side face of the stirring vessel is $\theta$.

According to claim 24, in the stirring vessel described in the above-mentioned invention, the acoustic wave generating unit has a center frequency of 100 MHz or more.

According to claim 25, in the stirring vessel described in the above-mentioned invention, the acoustic wave generating unit includes an acoustic chip and an acoustic matching layer.

According to claim 26, in the stirring vessel described in the above-mentioned invention, the acoustic chip has a piezoelectric substrate and an electrode.

According to claim 27, in the stirring vessel described in the above-mentioned invention, the electrode is an inter digital transducer.

According to claim 28, in the stirring vessel described in the above-mentioned invention, the acoustic wave generating unit is provided to the stirring vessel with plural electrodes constituting the inter digital transducer along a longitudinal direction of a mounting surface.

According to claim 29, in the stirring vessel described in the above-mentioned invention, the acoustic wave generating unit is provided to the stirring vessel with plural electrodes constituting the inter digital transducer along a vertical direction of a mounting surface.

According to claim 30, in the stirring vessel described in the above-mentioned invention, the acoustic wave generating unit has a center frequency of several MHz to 1 GHz.

According to claim 31, in the stirring vessel described in the above-mentioned invention, the acoustic chip is optically transparent.

According to claim 32, in the stirring vessel described in the above-mentioned invention, at least the piezoelectric substrate of the acoustic chip is optically transparent.

According to claim 33, in the stirring vessel described in the above-mentioned invention, the acoustic matching layer has any one of an adhesive, a liquid and a junction layer.

In order to solve the foregoing problem and achieve the object, a stirring method according to claim 34 is a stirring method for stirring a liquid with an acoustic wave, including the steps of asymmetrically emitting an acoustic wave into the liquid, and generating an asymmetric flow in the liquid by the asymmetric acoustic wave, wherein the liquid is stirred by the asymmetric flow.

In order to solve the foregoing problem and achieve the object, a stirrer according to claim 35 is a stirrer for stirring a liquid retained in the stirring vessel with an acoustic wave, including a transmitting unit that transmits power to the acoustic wave generating unit provided on the stirring vessel; and a power receiving unit that receives the power transmitted from the transmitting unit, wherein an asymmetric acoustic wave emitted from one or plural acoustic wave generating units into the liquid generates an asymmetric flow in the liquid, and the liquid is stirred by the asymmetric flow.

In order to solve the foregoing problem and achieve the object, an analyzer according to claim 36 is an analyzer that stirs to react a liquid sample containing a specimen retained in a vessel and a reagent to analyze a reaction solution, the analyzer including the stirrer.

In the present specification, the phrase that two or more acoustic wave generating means are arranged so as to be asymmetric with respect to the liquid means that two or more acoustic wave generating means have no common center of symmetry, common axis of symmetry or common plane of symmetry with respect to the liquid.

EFFECT OF THE INVENTION

The stirring vessel, stirring method, stirrer and analyzer provided with the stirrer have at least one acoustic wave generating means that emits an acoustic wave into a liquid and is provided as deviated on the stirring vessel. Therefore, the present invention can provide a stirring vessel, a stirring method, a stirrer and an analyzer provided with the stirrer that can stir the liquid over a wide range from the bottom part of the vessel to the gas/liquid interface, since an asymmetric acoustic flow is generated in the liquid by the acoustic wave generated from the acoustic wave generating means, and the generated acoustic flow can arrive at the gas/liquid interface without being canceled.

BRIEF DESCRIPTION OF DRAWINGS

FIG. 1 is a schematic structural view of an automatic analyzer provided with a stirrer according to a first embodiment of the present invention;
FIG. 2 is a block diagram showing the configuration of the automatic analyzer shown in FIG. 1;

FIG. 3 is a perspective view of a reactor vessel, according to the first embodiment, used in the automatic analyzer shown in FIG. 1;
FIG. 4 is a perspective view showing the state in which a transmitter comes in contact with an electric terminal of a surface acoustic wave device, which is provided to the reactor vessel, with a contactor;
FIG. 5 is a perspective view showing an acoustic chip of the surface acoustic wave device;
FIG. 6 is a cross-sectional view showing an acoustic wave emitted to the liquid in the reactor vessel and an acoustic flow produced by the acoustic wave;
FIG. 7 is a view for explaining the position of the end portion of the surface acoustic wave device provided at the outer surface of the reactor vessel;
FIG. 8 is a view for explaining the manner of photometry of the reactor vessel by using the acoustic chip made of a transparent material;
FIG. 9 is a view for explaining the manner of photometry of the reactor vessel in case where the acoustic chip and the transducer are made of a transparent material;
FIG. 10 is an enlarged view of an essential part of the reactor vessel to which the acoustic chip is mounted by using a junction layer by a diffusion junction as an acoustic matching layer;
FIG. 11 is a cross-sectional view of an essential part of the reactor vessel in FIG. 3, showing the acoustic wave induced by a transducer of the surface acoustic wave device;
FIG. 12 is a cross-sectional view of an essential part showing a propagation process of the induced acoustic wave;
FIG. 13 is a cross-sectional view of an essential part showing the propagation process of the induced acoustic wave and the state in which the acoustic wave is leaked into the liquid sample;
FIG. 14 is a perspective view showing a first modification of the reactor vessel according to the first embodiment;
FIG. 15 is a perspective view showing a second modification of the reactor vessel according to the first embodiment;
FIG. 16 is a perspective view showing a third modification of the reactor vessel according to the first embodiment;
FIG. 17 is a perspective view showing a fourth modification of the reactor vessel according to the first embodiment;
FIG. 18 is a perspective view of a stirring vessel according to a second embodiment of the present invention;
FIG. 19 is a cross-sectional view showing an acoustic wave and an acoustic flow in the liquid sample in the stirring vessel shown in FIG. 18;
FIG. 20 is a view for explaining the relationship between a spaced distance of the transducers of two surface acoustic wave devices and an acoustic wave arrival distance of each surface acoustic wave device;

FIG. 21 is a cross-sectional view for explaining the number of acoustic wave generating means;

FIG. 22 is a plan view for explaining the number of acoustic wave generating means;

FIG. 23 is a view for explaining the relationship between the effective dimension of plural surface acoustic wave devices and the dimension of the liquid sample;

FIG. 24 is a view for explaining the minimum value of the effective dimension;

FIG. 25 is a view for explaining the manner of setting a center frequency when three surface acoustic wave devices are used;

FIG. 26A is a view for explaining a first mode of use of three surface acoustic wave devices;

FIG. 26B is a view for explaining a second mode of use of three surface acoustic wave devices;

FIG. 26C is a view for explaining a third mode of use of three surface acoustic wave devices;

FIG. 27 is a view for explaining the manner of setting the wavelength of the acoustic wave emitted from the surface acoustic wave device that is arranged in the vicinity of meniscus in the vertical direction;

FIG. 28 is a perspective view showing a first modification of the stirring vessel according to the second embodiment;

FIG. 29 is a cross-sectional view showing the acoustic wave and the acoustic flow in the liquid sample in the stirring vessel shown in FIG. 28;

FIG. 30 is a perspective view showing a second modification of the stirring vessel according to the second embodiment;

FIG. 31 is a cross-sectional view showing the acoustic wave and the acoustic flow in the liquid sample in the stirring vessel shown in FIG. 30;

FIG. 32 is a perspective view showing a third modification of the stirring vessel according to the second embodiment;

FIG. 33 is a cross-sectional view showing the acoustic wave and the acoustic flow in the liquid sample in the stirring vessel shown in FIG. 32;

FIG. 34 is a perspective view showing a fourth modification of the stirring vessel according to the second embodiment;

FIG. 35 is a cross-sectional view showing the acoustic wave and the acoustic flow in the liquid sample in the stirring vessel shown in FIG. 34;

FIG. 36 is a perspective view showing a fifth modification of the stirring vessel according to the second embodiment;

FIG. 37 is a schematic view showing the acoustic flow in the liquid sample in the stirring vessel shown in FIG. 36;

FIG. 38 is a perspective view showing a sixth modification of the stirring vessel according to the second embodiment;

FIG. 39 is a cross-sectional view showing the acoustic wave and the acoustic flow in the liquid sample in the stirring vessel shown in FIG. 38;

FIG. 40 is a perspective view showing a seventh modification of the stirring vessel according to the second embodiment;

FIG. 41 is a perspective view showing an eighth modification of the stirring vessel according to the second embodiment;

FIG. 42 is a perspective view showing a ninth modification of the stirring vessel according to the second embodiment;

FIG. 43 is a perspective view showing a tenth modification of the stirring vessel according to the second embodiment;

FIG. 44 is a perspective view showing an eleventh modification of the stirring vessel according to the second embodiment;

FIG. 45 is a perspective view showing a twelfth modification of the stirring vessel according to the second embodiment;

FIG. 46 is a schematic view showing the acoustic flow in the liquid sample in the stirring vessel shown in FIG. 45;

FIG. 47 is a perspective view showing a thirteenth modification of the stirring vessel according to the second embodiment;

FIG. 48 is a perspective view showing a fourteenth modification of the stirring vessel according to the second embodiment;

FIG. 49 is a perspective view showing a fifteenth modification of the stirring vessel according to the second embodiment;

FIG. 50 is a perspective view showing a sixteenth modification of the stirring vessel according to the second embodiment;

FIG. 51 is a block diagram of a stirrer that wirelessly transmits power to the acoustic chip, together with the stirring vessel according to the present invention;

FIG. 52 is a perspective view of the acoustic chip mounted to the reactor vessel shown in FIG. 51; and

FIG. 53 is a cross-sectional view showing an acoustic wave and an acoustic flow in a liquid in a conventional stirring vessel.

EXPLANATION OF LETTERS OF NUMERALS

| 1 | Automatic analyzer |
|---|---|
| 2, 3 | Reagent table |
| 2a, 3a | Reagent vessel |
| 4 | Reaction table |
| 5 | Reaction vessel |
| 5a | Outer side face |
| 5b | Inner side face |
| 5c | Inner bottom face |
| 5d | Outer bottom face |

| | |
|---|---|
| 5e | Extraction electrode |
| 6, 7 | Reagent dispensing mechanism |
| 8 | Specimen vessel transferring mechanism |
| 9 | Feeder |
| 10 | Rack |
| 11 | Specimen dispensing mechanism |
| 12 | Analyzing optical system |
| 13 | Cleaning mechanism |
| 15 | Control unit |
| 20 | Stirrer |
| 21 | Transmission member |
| 22 | Arrangement determining member |
| 23 | Surface acoustic wave device |
| 24, 33 | Acoustic chip |
| 24a, 33a | Substrate |
| 24b, 33b | Transducer |
| 24c | Electric terminal |
| 24d | Conductive circuit |
| 33c | Antenna |
| 25 | Acoustic matching layer |
| 30 | Stirrer |
| 31 | Transmission member |
| 31a | RF transmission antenna |
| 51, 52 | Reactor vessel |
| 53, 54 | Reactor vessel |
| 55, 56 | Reactor vessel |
| 57 | Reactor vessel |
| Ao | Emission area |
| Ap | Area |
| Da1, | Da2 Sonic wave arrival distance |
| Dg | Diagonal line |
| Dm | Diameter |
| Dt | Spaced distance |
| Fs | Acoustic flow |
| Fcc, | Fcw Acoustic flow |
| Fsb, | Fss Acoustic flow |
| Ls | Liquid sample |
| M | Gas/liquid interface (meniscus) |
| Wa | Sonic wave |

BEST MODE FOR CARRYING OUT THE INVENTION

(First Embodiment)

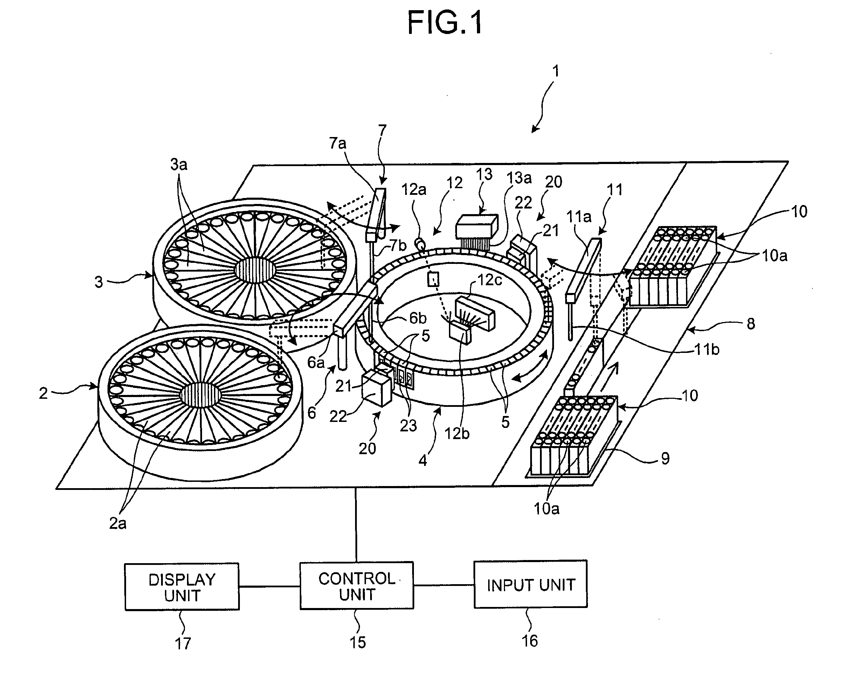

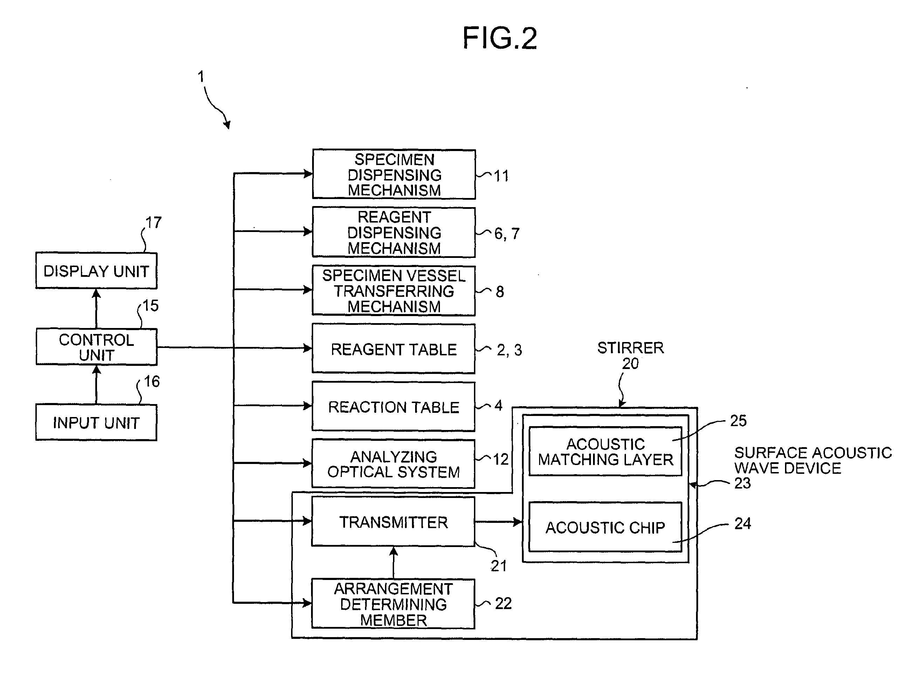

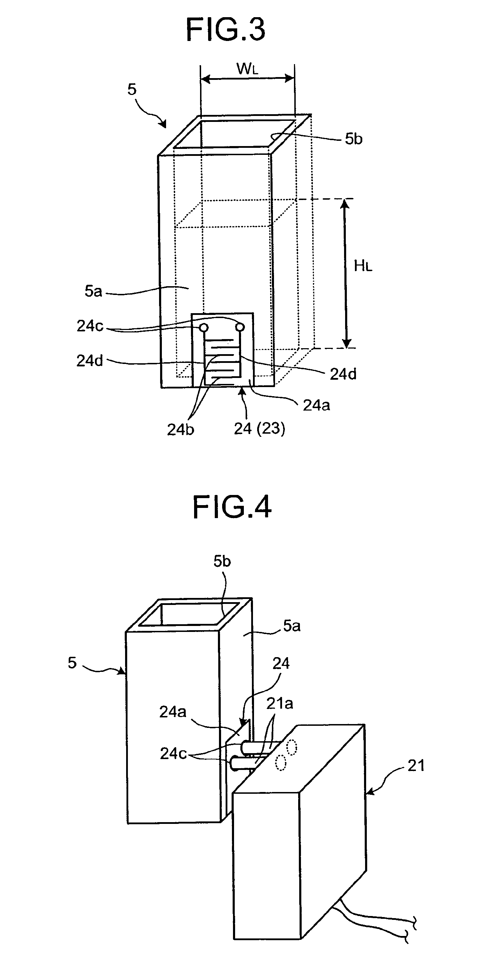

A first embodiment according to a stirring vessel, a stirring method, a stirrer, and an analyzer provided with the stirrer according to the present invention will be explained below in detail with reference to the drawings. FIG. 1 is a schematic structural view of an automatic analyzer provided with a stirrer. FIG. 2 is a block diagram showing the configuration of the automatic analyzer shown in FIG. 1. FIG. 3 is a perspective view of a stirring vessel used in the automatic analyzer shown in FIG. 1.

The automatic analyzer 1 has reagent tables 2, 3, a reaction table 4, a specimen vessel transferring mechanism 8, an analyzing optical system 12, a cleaning mechanism 13, a control unit 15, and a stirrer 20, as shown in FIGS. 1 and 2.

As shown in FIG. 1, the reagent tables 2 and 3 have plural reagent vessels 2a and 3a arranged in the circumferential direction, and they are rotated by unillustrated driving means so as to convey the reagent vessels 2a and 3a in the circumferential direction.

As shown in FIG. 1, the reaction table 4 has plural reaction vessels 5 arranged along the circumferential direction, and it is normally or inversely rotated in the direction indicated by an arrow by unillustrated driving means so as to convey the reaction vessels 5. The reagent is dispensed into the reaction vessels 5 from the reagent vessels 2a and 3a of the reagent tables 2 and 3 by reagent dispensing mechanisms 6 and 7 disposed in the vicinity of the reaction vessels 5. The reagent dispensing mechanisms 6 and 7 have arms 6a and 7a that pivot in the horizontal plane in the direction indicated by the arrow, probes 6b and 7b provided at the arms 6a and 7a for dispensing the reagent, and cleaning means (not shown) for cleaning the probes 6b and 7b with washwater.

The reactor vessel 5 is made of an optically transparent material. As shown in FIG. 3, the reactor vessel 5 is a stirring vessel having a square cylindrical shape for retaining a liquid. A surface acoustic wave device 23, which emits a surface acoustic wave (acoustic wave) into the retained liquid, is provided at the lower part of an outer side face 5a of the reactor vessel 5 as deviated with respect to the liquid. The reactor vessel 5 is made of a material that transmits 80% or more of light included in the analytical light (340 to 800 nm) emitted from a later-described analyzing optical system 12, e.g., a glT containing a heat-resistant glass, a synthetic resin such as ring olefin or polystyrene, etc. are used. The reactor vessel 5 is set to the reaction table 4 with the surface acoustic wave device 23 facing outwardly.

The specimen vessel transferring mechanism 8 is, as shown in FIG. 1, transferring means for transferring, one by one, plural racks 10 arranged to a feeder 9 along the direction indicated by the arrow, wherein the racks 10 are transferred as advanced step by step. The rack 10 holds plural specimen vessels 10a accommodating a specimen. Every time the advance of the rack 10 transferred by the specimen vessel transferring mechanism 8 is stopped, the specimen is dispensed into each reaction vessel 5 by a specimen dispensing mechanism 11 having an arm 11a that is horizontally pivoted and a probe 11b. Therefore, the specimen dispensing mechanism 11 has cleaning means (not shown) for cleaning the probe 11b with washwater.

The analyzing optical system 12 emits an analytical light (340 to 800 nm) for analyzing the liquid sample, in the reaction vessel 5, obtained by the reaction of the reagent and the specimen. As shown in FIG. 1, the analyzing optical system 12 has a light-emitting unit 12a, a photometry unit 12b, and a light-receiving unit 12c. The analytical light emitted from the light-emitting unit 12a transmits the liquid sample in the reaction vessel 5 and received by the light-receiving unit 12c provided at the position opposite to the photometry unit 12b. The light-receiving unit 12c is connected to the control unit 15.

The cleaning mechanism 13 sucks the liquid sample in the reactor vessel 5 with a nozzle 13a for discharging the same, and then, repeatedly injects and sucks a detergent or washwater by the nozzle 13a, whereby the reactor vessel 5 in which the analysis by the analyzing optical system 12 is completed is cleaned.

The control unit 15 controls the operation of each unit of the automatic analyzer 1, and analyzes the component or concentration, etc. of the specimen on the basis of the absorbance of the liquid sample in the reaction vessel 5 according to the quantity of the light emitted from the light-emitting unit 12a and the quantity of the light received by the light-receiving unit 12c. For example, a microcomputer or the like is used for the control unit 15. The control unit 15 is connected to an input unit 16 such as a keyboard and a display unit 17 such as a display panel as shown in FIGS. 1 and 2.

The stirrer 20 has a transmitter 21 and the surface acoustic wave device 23 as shown in FIGS. 1 and 2. The transmitter 21 is arranged at the opposing position at the outer periphery of the reaction table 4 so as to be opposite to the reaction vessel 5 in the horizontal direction. The transmitter 21 is transmitting means for transmitting power, which is supplied from a high-frequency AC power supply with about several MHz to several hundreds MHz, to the surface acoustic wave device 23. The transmitter 21 has a driving circuit and a controller, and has a brush-like contactor 21a that comes in contact with an electric terminal 24c of an acoustic chip 24 as shown in FIG. 4. In this case, the transmitter 21 is supported by an arrangement determining member 22 as shown in FIG. 1, whereby the transmitter 21 transmits power to the electric terminal 24c from the contactor 21c when the rotation of the reaction table 4 is stopped.

The arrangement determining member 22 is controlled by the control unit 15. When the power is transmitted from the transmitter 21 to the electric terminal 24c, the arrangement determining member 22 moves the transmitter 21 for adjusting the relative arrangement of the transmitter 21 and the electric terminal 24c in the circumferential direction and radius direction of the reaction table 4. A two-axis stage is employed, for example. Specifically, when the reaction table 4 rotates and power is not transmitted from the transmitter 21 to the electric terminal 24c, the operation of the arrangement determining member 22 is stopped so as to hold a fixed distance between the transmitter 21 and the electric terminal 24c. When the reaction table 4 is stopped and the power is transmitted from the transmitter 21 to the electric terminal 24c, the arrangement determining member 22 is operated under the control of the control unit 15, wherein the arrangement determining member 22 moves the transmitter 21 so as to adjust the position along the circumferential direction of the reaction table 4 in order to oppose the transmitter 21 and the electric terminal 24c, and makes the transmitter 21 and the electric terminal 24c close to each other to bring the contactor 21a into contact with the electric terminal 24c, thereby determining the relative arrangement of the transmitter 21 and the electric terminal 24c.

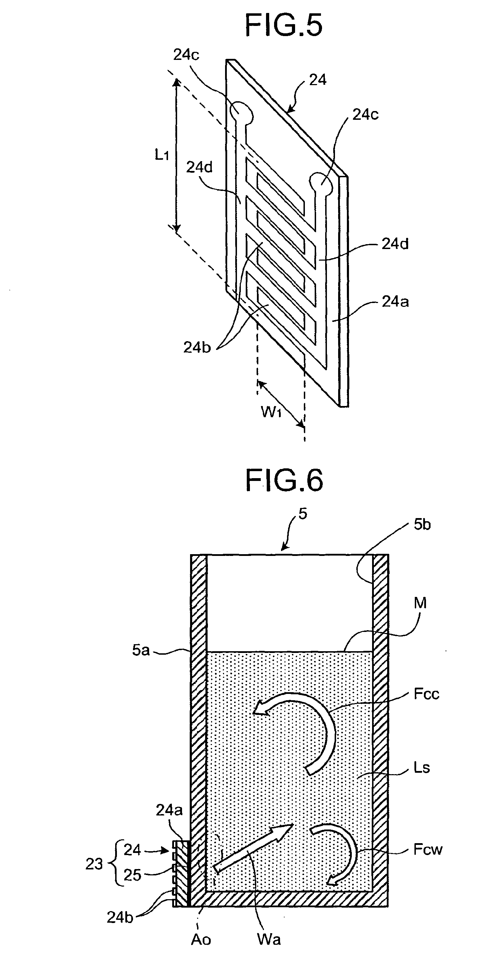

As shown in FIGS. 3 to 6, the surface acoustic wave device 23 is acoustic wave generating means having the acoustic chip 24 and an acoustic matching layer 25. The surface acoustic wave device 23 used here has a center frequency of several MHz to 1 GHz. In order to reduce energy loss of the generated surface acoustic wave (acoustic wave), the surface acoustic wave device 23 is provided so as to be located lower than the position where a gas/liquid interface (meniscus) M of the liquid comes in contact with an inner side face 5b of the reactor vessel 5 in the vertical direction as shown in FIG. 3 or FIG. 6. Further, the effective dimension of the reactor vessel 5 in the horizontal direction at the cross section through the surface acoustic wave device 23 and the effective dimension of the reactor vessel 5 in the vertical direction are set to be not more than a half the dimension WL of the liquid sample present at its cross section in the horizontal direction or the dimension HL (see FIG. 3) in the vertical direction.

The effective dimension of the surface acoustic wave device 23 means here the dimension contributing to the generation of the surface acoustic wave (hereinafter simply referred to as "acoustic wave") from a transducer 24b of the acoustic chip 24. In the present specification, the distance in the horizontal direction in which plural electrodes arranged in the longitudinal direction are overlapped with each other is defined as the effective dimension W1 and the distance linking the centers of the electrodes arranged at both upper and lower ends is defined as the effective dimension H1.

The surface acoustic wave device 23, which is the acoustic wave generating means, is defined as the one having the acoustic chip 24 and the acoustic matching layer 25, wherein the transducer 24b is present on the acoustic chip 24. Therefore, the one having no transducer 24b, although having the acoustic matching layer 25, is not defined as the surface acoustic wave device 23. When plural independent transducers 24b are present on a substrate 24a on which the acoustic matching layer 25 is present, it is described in the present specification that plural surface acoustic wave devices 23 are present.

The acoustic chip 24 has the transducer 24b made of an IDT (Inter Digital Transducer) provided on the surface of the substrate 24a made of a piezoelectric material as shown in FIGS. 3 and 5. The transducer 24b converts the power transmitted from the transmitter 21 into an acoustic wave and has plural electrodes, which form the IDT, arranged at the outer side face 5a of the reactor vessel 5 along the longitudinal direction (vertical direction) in order to emit the acoustic wave Wa in the diagonally upward direction as shown in FIG. 6. In other words, the surface acoustic wave device 23 is mounted to the outer side face 5a of the reactor vessel 5 in such a manner that the plural electrodes constituting the transducer 24b are arranged in the vertical direction when the reactor vessel 5 is set to the automatic analyzer 1.

In this case, the transducer 24b is formed at the lower part of the substrate 24a as shown in FIG. 5, and the acoustic chip 24 is provided to be displaced to the lower part of the outer side face 5a of the reactor vessel 5 through the acoustic matching layer 25 made of epoxy resin or the like with the transducer 24b facing outwardly as shown in FIGS. 3 and 6. The transducer 24b and the electric terminal 24c, which is power receiving means, are connected via a conductive circuit 24d.

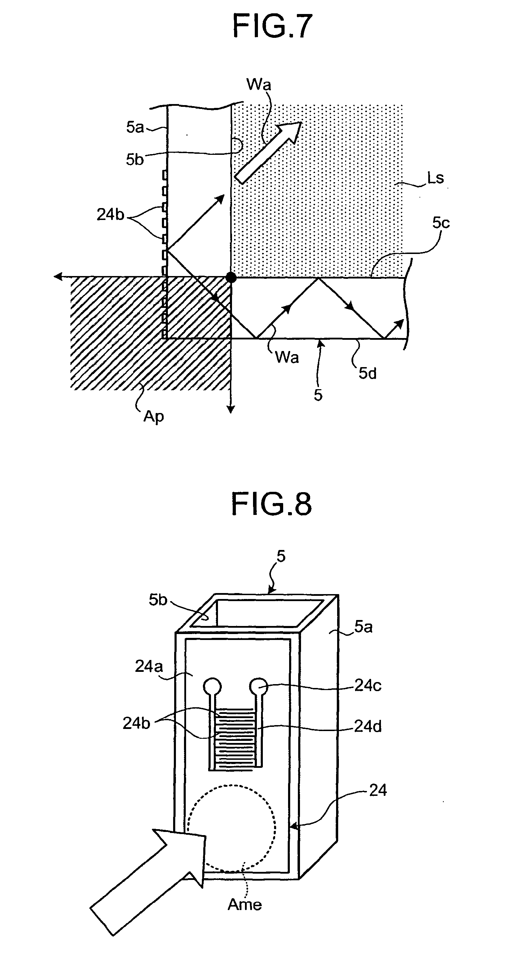

When one surface acoustic wave device 23 is provided to the reactor vessel 5, the surface acoustic wave device 23 is provided at the position deviated to the vertical upper position or vertical lower position in order to provide the surface acoustic wave device 23 to the side face of the reactor vessel 5. In order to provide the surface acoustic wave device 23 to the bottom face of the reactor vessel 5, the surface acoustic wave device 23 is provided at the position deviated from the intersection or the center of the diagonal line. With this structure, the acoustic wave is emitted in only one direction. Accordingly, the surface acoustic wave device 23 is provided to the reactor vessel 5 as deviated relative to the liquid. In this case, the surface acoustic wave device 23 is provided in such a manner that, as shown in FIG. 7, the end portion of the transducer 24b is arranged at the area Ap that is lower than an inner bottom face 5c in the vertical direction and outer than the inner side face 5b in the horizontal direction. The end portion of the transducer 24b is similarly arranged if the surface acoustic wave device 23 is provided to the outer bottom face 5d.

When the end portion of the transducer 24b is arranged at the area Ap, the acoustic wave Wa generated from the lower half part of the transducer 24b is propagated in the bottom face as reflected by the inner bottom face 5c and the outer bottom face 5d, i.e., the acoustic wave Wa is not emitted into the liquid sample Ls, as shown in FIG. 7. On the other hand, the acoustic wave Wa generated from the upper half part of the transducer 24b is emitted into the liquid sample Ls. Therefore, as shown in FIG. 6, the acoustic wave Wa is asymmetrically emitted from one emission area Ao, which is deviated in the downward direction of the inner side face 5b of the reaction vessel 5, into the liquid sample Ls in the diagonally upward direction. In FIG. 7, the substrate 24a and the acoustic matching layer 25 are omitted in order to clarify the arrangement of the transducer 24b.

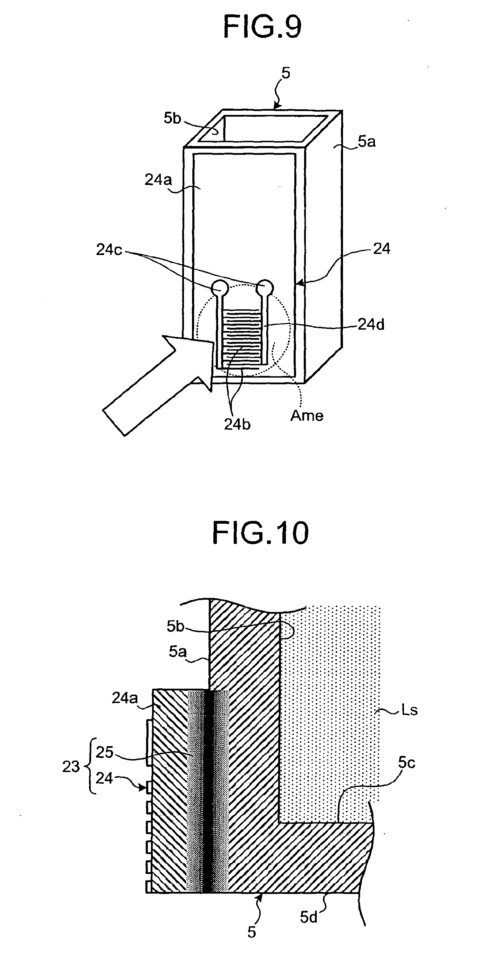

Since the liquid sample obtained by the reaction of the reagent and the specimen is optically measured, the substrate 24a of the acoustic chip 24 in the reaction vessel 5 is made of a transparent material such as a crystal, lithium niobate ($LiNbO_3$), lithium tantalate ($LiTaO_3$), etc. In this case, as shown in FIG. 8, the transducer 24b is provided at the upper part of the substrate 24a in order that the acoustic chip 24 is deviated with respect to the liquid sample. Thus, the portion of the reactor vessel 5 below the transducer 24b can be used as a photometry area Ame of the liquid sample. In this case, if the transducer 24b is made of indium tin oxide (ITO), the transducer 24b, i.e., the entire acoustic chip 24 is made transparent. Therefore, as shown in FIG. 9, the portion of the reactor vessel 5 below the transducer 24b can be used as the photometry area Ame of the liquid sample. Accordingly, the transducer 24b of the surface acoustic wave device 23 can be arranged at the lower part of the reactor vessel 5, whereby the limitation on the arrangement of the transducer 24b is eliminated.

On the other hand, the acoustic matching layer 25 matches the acoustic impedance of the surface acoustic wave device 23 and the reactor vessel 5, and emits the acoustic wave generated by the transducer 24b to the liquid. The acoustic matching layer 25 may be made of an adhesive such as epoxy resin or liquid. Alternatively, a junction layer formed by bonding the reactor vessel 5 and the substrate 24a by a diffusion junction may be employed as the acoustic matching layer 25 as shown in FIG. 10.

In the automatic analyzer thus configured, the reagent dispensing mechanisms 6 and 7 successively dispense the reagent from the reagent vessels 2a and 3a into the plural reactor vessels 5 conveyed along the circumferential direction by the rotating reaction table 4. The specimen is successively dispensed by the specimen dispensing mechanism 11 into the reactor vessel 5, into which the reagent is dispensed, from the plural specimen vessels 10a retained by the rack 10. Then, the reactor vessel 5 having the reagent and the specimen dispensed therein is stirred one by one by the stirrer 20 every time the reaction table 4 stops, whereby the reagent and the specimen are reacted. When the reaction table 4 rotates again, the reactor vessel 5 passes through the analyzing optical system 12. In this case, the liquid sample in the reaction vessel 5 is subject to photometry at the light-receiving unit 12c, and the component and concentration, etc. are analyzed by the control unit 15. The reactor vessel 5 to which the analysis is completed is cleaned by the cleaning mechanism 13, and then, used again for the analysis of the specimen.

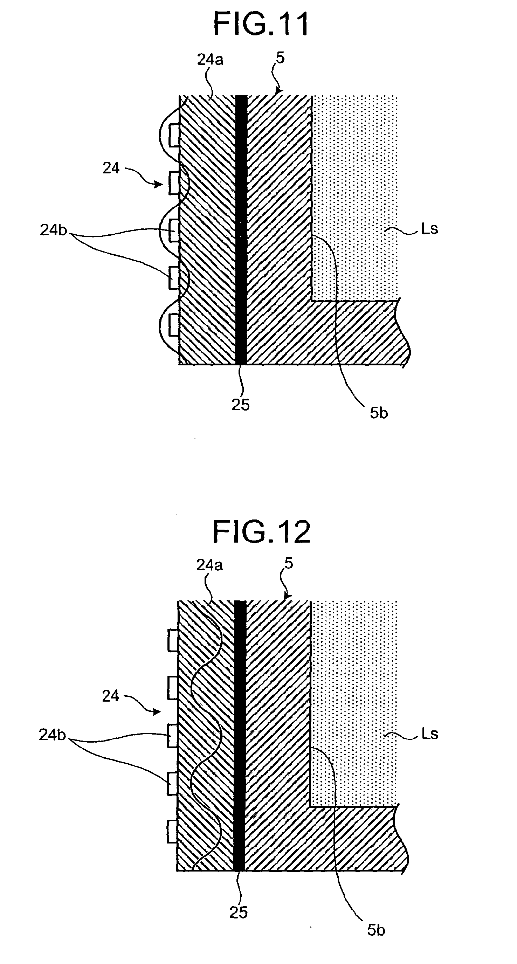

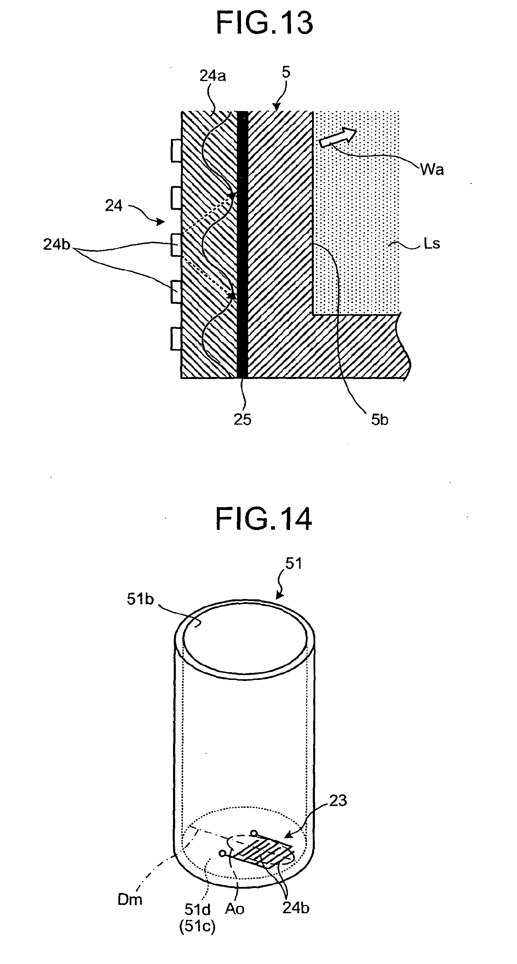

In this case, in the stirrer 20, the transmitter 21 transmits power to the electric terminal 24c of the acoustic chip 24 from the contactor 21a when the reaction table 4 stops. Thus, the transducer 24b of the surface acoustic wave device 23 is driven, thereby inducing the acoustic wave indicated by the wavy line in FIG. 11. The induced acoustic wave propagates to the inner side face of the reactor vessel 5 through the inside of the acoustic chip 24 and the acoustic matching layer 25 as shown by the wavy line in FIGS. 12 and 13, whereby the acoustic wave Wa whose impedance is closer to the liquid sample Ls leaks into the liquid sample Ls in the diagonally upward direction from the inner side face 5b closer to the bottom face. Specifically, the acoustic wave Wa leaks in the diagonally upward direction from the inner side face 5b closer to the bottom face as shown in FIG. 6. In FIG. 13, the arrow shown by the dotted line in the acoustic chip 24 indicates the advancing direction of the acoustic wave. As a result, the acoustic wave Wa produces the acoustic flow Fcc in the counterclockwise direction that arrives at the gas/liquid interface in the upper part of the liquid sample Ls and asymmetrically produces the acoustic flow Fcw in the clockwise direction in the lower part of the liquid sample Ls. The two asymmetric acoustic flows Fcc and Fcw allow the liquid sample Ls composed of the dispensed reagent and the specimen in the reactor vessel 5 to be stirred over a wide range from the bottom part to the gas/liquid interface.

In this case, as the surface acoustic wave device 23 is provided at the lower part of the reactor vessel 5, it provides a great effect of moving the liquid sample Ls with a great specific gravity in the upward direction. In the stirrer 20, the arrangement determining member 22 makes the transmitter 21 and the electric terminal 24c close to each other and adjusts the position of the transmitter 21 and the electric terminal 24c so as to oppose the transmitter 21 and the electric terminal 24c to each other, whereby the power transmission from the transmitter 21c to the electric terminal 24c is smoothly performed.

In the reactor vessel 5, the stirring method, the stirrer 20, and the automatic analyzer provided with the stirrer 20 according to the present invention, the surface acoustic wave device 23 is provided as deviated with respect to the reactor vessel 5, whereby the acoustic flow generated in the liquid in the reactor vessel 5 arrives at the gas/liquid interface. Therefore, the liquid can be stirred over a wide range from the bottom part of the reactor vessel 5 to the gas/liquid interface. Since the surface acoustic wave device 23 employs the inter digital transducer (IDT) as the transducer 24b, the surface acoustic wave device 23 has a simple structure and can be miniaturized. Since the surface acoustic wave generated by the surface acoustic wave device 23 propagates to the liquid sample Ls through the acoustic matching layer 25 and the side face, and it is difficult to be attenuated, the reactor vessel 5 is excellent in energy transmission efficiency. Further, since the surface acoustic wave device 23 is used, the reactor vessel 5 can be made to have a simple structure. Therefore, the use of the reactor vessel 5 makes it possible to downsize the stirrer 20 and the automatic analyzer 1, which brings simplified maintenance.

The stirring vessel may have a cylindrical shape like a reactor vessel 51 shown in FIG. 14. In this case, the surface acoustic wave device 23 is mounted to the position deviated from the center of an outer bottom face 51d. Specifically, the surface acoustic wave device 23 is provided to the reactor vessel 51 as deviated. The plural electrodes constituting the transducer 24b of the acoustic chip 24 are arranged in the radius direction of the outer bottom face 51d. With this structure, in the reactor vessel 51, the emission area Ao is formed at the position deviated in the outwardly horizontal direction on the diameter Dm of an inner bottom face 51c, so that the acoustic wave is asymmetrically emitted in the retained liquid. Therefore, the reactor vessel 51 can be stirred by the asymmetric acoustic flows produced in the liquid sample by the emitted acoustic wave.

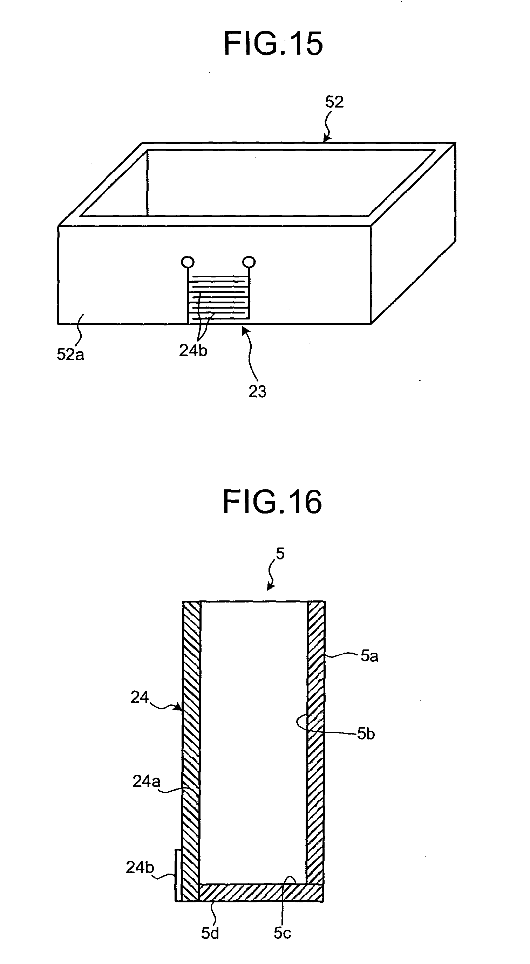

The stirring vessel may have a shape of shallow cylindrical square like a reactor vessel 52 shown in FIG. 15. In this case, the surface acoustic wave device 23 is mounted to the lower part of an outer side face 52a, i.e., to the reactor vessel 52 as deviated. With this structure, the acoustic wave is emitted in the diagonally upward direction by the transducer 24b of the surface acoustic wave device 23, whereby the liquid retained in the reactor vessel 52 is stirred.

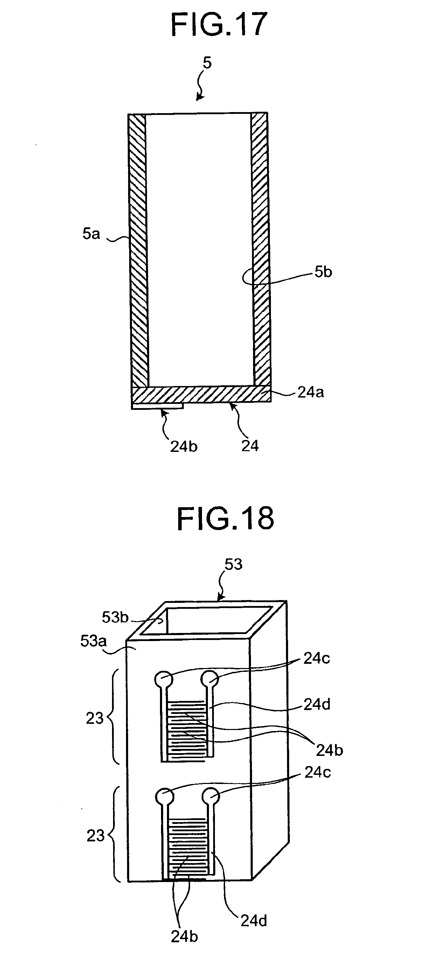

Since the surface acoustic wave device 23 can be miniaturized, the stirring vessel may use the acoustic chip 24 as a part of the side wall like a reactor vessel 5 shown in FIG. 16. Alternatively, the acoustic chip 24 may be used as a bottom wall like a reactor vessel 5 shown in FIG. 17. In the case of the reactor vessel 5 shown in FIG. 16, the lower end portion of the transducer 24b of the acoustic chip 24 is arranged at the position lower than the inner bottom face 5c in the vertical direction, while in the case of the reactor vessel 5 shown in FIG. 17, the end portion of the transducer 24b is arranged at the position outer than the inner side face 5b in the horizontal direction.

(Second Embodiment)

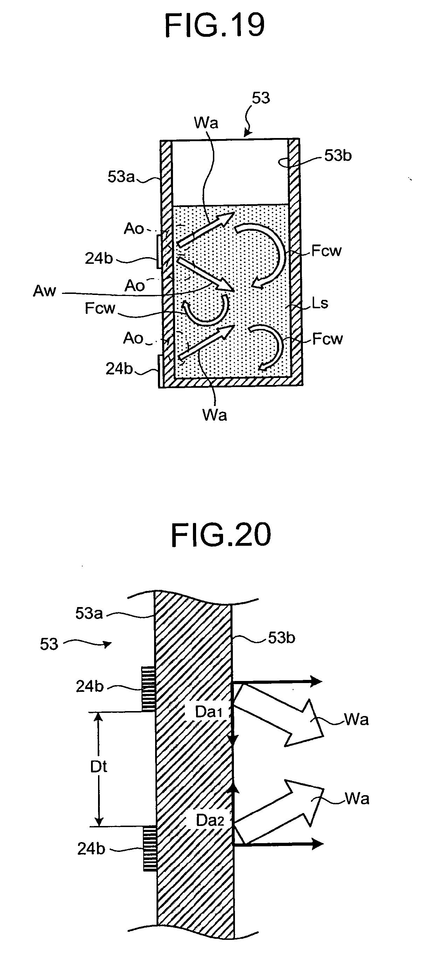

A second embodiment according to a stirring vessel, a stirring method, a stirrer, and an analyzer provided with the stirrer according to the present invention will be explained below in detail with reference to the drawings. The stirring method, stirrer and stirrer explained below are the same as those in the first embodiment, so that the stirring vessel will be explained below. The stirring vessel in the first embodiment has only one surface acoustic wave device 23. On the other hand, the stirring vessel in the second embodiment has two or more surface acoustic wave devices 23, wherein at least one of them is provided as deviated. The stirring vessel has the same configuration as that in the first embodiment unless otherwise stated, and like parts have similar reference numerals. FIG. 18 is a perspective view of a stirring vessel according to the second embodiment of the present invention. FIG. 19 is a cross-sectional view of the stirring vessel in FIG. 18.

As shown in FIGS. 18 and 19, in the reactor vessel 53, one of two transducers 24b of the acoustic chip 24 is provided to the lower part of an outer side face 53a of the reactor vessel 53 as deviated with respect to the liquid sample, while the other one is provided at about the center of the outer side face 53a. The two transducers 24b are arranged in one line along the vertical direction, so that two surface acoustic wave devices 23 are provided to the same outer side face 53a with a space. Therefore, two surface acoustic wave devices 23 are arranged so as to be asymmetric with respect to the liquid sample Ls in the vertical direction as shown in the figure, resulting in that they have no common center of symmetry, axis of symmetry or plane of symmetry. In FIGS. 18 and 19, the substrate 24a of the acoustic chip 24 and the acoustic matching layer 25 constituting the surface acoustic wave device 23 are omitted.

In the reaction vessel 53, when the transducers 24b of the surface acoustic wave devices 23 are driven, the acoustic wave Wa produced by the transducers 24b leaks into the liquid sample Ls whose acoustic impedance is close to the acoustic wave Wa in the different three directions from different three emission areas Ao at an inner side face 53b, as shown in FIG. 19. The acoustic wave Wa leaking in the different three directions asymmetrically produce three acoustic flows Fcw in the liquid sample Ls in the clockwise direction. The asymmetric three acoustic flows Fcw stir the liquid sample Ls composed of the dispensed reagent and the specimen in the reactor vessel 53 over a wide range from the bottom part to the gas/liquid interface.

Since the upper transducer 24b is arranged at the reactor vessel 53 in the vicinity of the gas/liquid interface, the gas/liquid interface is fluctuated not only by the acoustic flow Fcw but also by the acoustic radiation pressure. The lower transducer 24b has a great effect of moving the liquid sample Ls, having a great specific gravity, in the upward direction. Therefore, when the reactor vessel 53 is made of a material having a high affinity to the retained liquid sample Ls, the flow enters the portion where the meniscus of the liquid sample Ls comes in contact with the inner side face 53b by the two transducers 24b, whereby the liquid sample Ls is stirred over a wide range. Consequently, a high stirring efficiency can be achieved.

When plural surface acoustic wave devices 23, which are the acoustic wave generating means, are mounted on the same mounting surfaces of the stirring vessel according to the present invention, it is necessary that a complicated flow field is formed by the overlap of the acoustic wave generated by the transducers 24b of the adjacent surface acoustic wave devices 23, and the acoustic wave is not canceled on the contrary. Therefore, the spaced distance of the transducers simultaneously operated should be optimized. For example, as shown in FIG. 20, the spaced distance Dt between two adjacent surface acoustic wave devices 23, which are simultaneously operated, in the direction along the outer side face 53a of the reactor vessel 53 that is the mounting surface is set to be not less than the sum ($Dt \geq Da1 + Da2$) of the acoustic wave arrival distances Da1 and Da2 of the acoustic wave Wa of the surface acoustic wave devices 23 in the direction along the outer side face 53a.

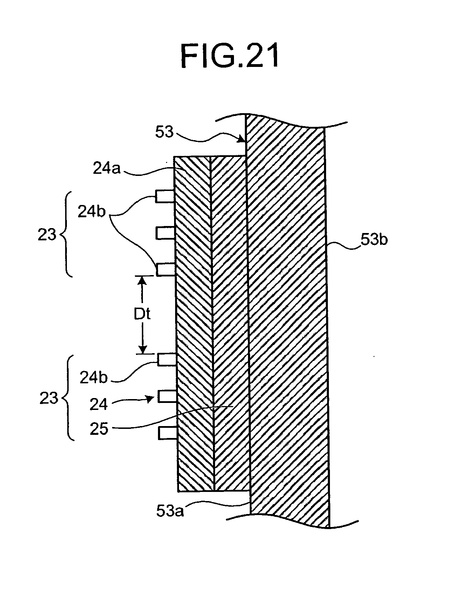

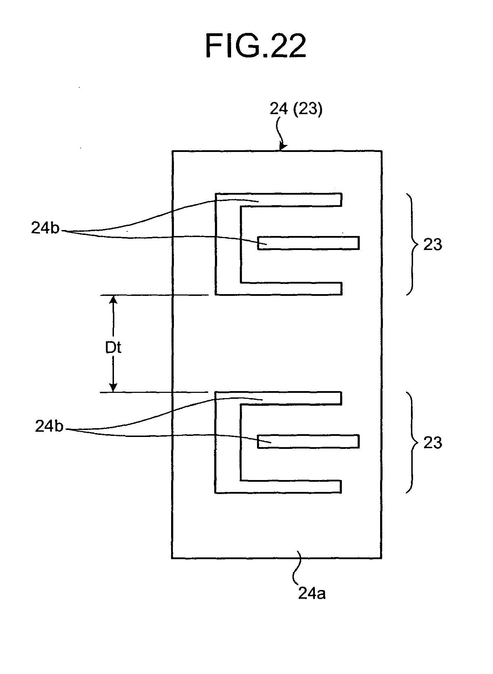

In this case, although the acoustic matching layer 25 is present, the portion where the transducer 24b is not present does not become the acoustic wave generating means as shown in FIGS. 21 and 22. Therefore, two surface acoustic wave devices 23 are independently present in FIGS. 21 and 22, wherein the distance between the two transducers 24b of the corresponding surface acoustic wave devices 23 is referred to as the spaced distance Dt.

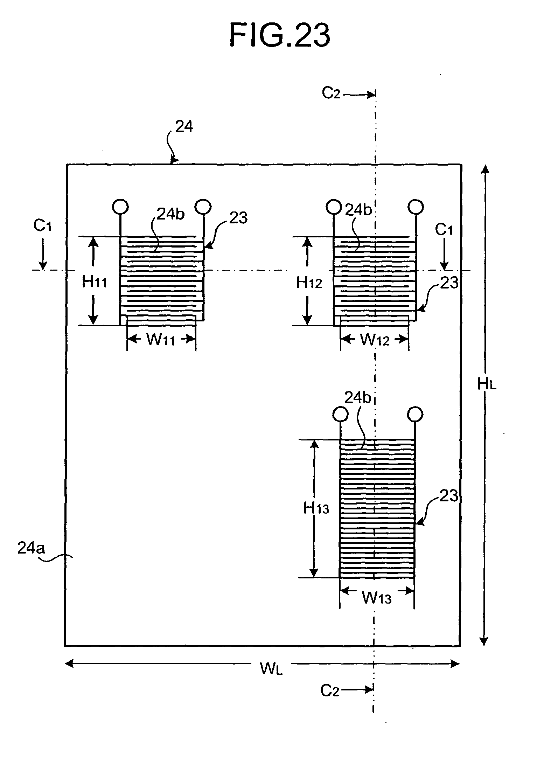

On the other hand, when plural surface acoustic wave devices 23, i.e., three surface acoustic wave devices 23 are mounted to the reactor vessel, the dimension of C1-C1 through the two surface acoustic wave devices 23 in the horizontal direction and the dimension of C2-C2 through two surface acoustic wave devices 23 in the vertical direction are set as follows as shown in FIG. 23. Specifically, supposing that the effective dimensions of the three surface acoustic wave devices 23 in the horizontal direction are defined as W1 to W3 and the effective dimensions in the vertical direction are defined as H1 to H3, the sum of the effective dimensions W1 to W3 or the effective dimensions H1 to H3 at each cross section is set to be not more than a half the dimension WL in the horizontal direction or the dimension HL in the vertical direction of the liquid sample present at each cross section. Specifically, they are set so as to satisfy the relationship described below. Since each of the transducers 24b should have one or more wavelengths in order to generate an acoustic wave, the effective dimensions H1 to H3 are set to be one or more wavelengths emitted from the transducer 24b. As for the surface acoustic wave device 23 that does not feed power, the effective dimension in the following equation is set to zero.

$$W11 + W12 \leq WL/2$$

$$H12 + H13 \leq HL/2$$

More preferably, the sum (W11 + W12) in the direction orthogonal to the generating direction of the acoustic wave by the acoustic wave generating means, i.e., the sum of the dimension at the cross section of C1-C1 is set to be not more than a third the size (WL) of the liquid sample present at the cross section of C1-C1 and not less than a product of the half wavelength ($\lambda/2$) of the emitted acoustic wave and the number (n) of the surface acoustic wave devices 23. Specifically, the relationship indicated by the following equation is established, since n = 2 in this case.

$$2 \cdot \lambda /2 \leq W11 + W12 \leq WL/3$$

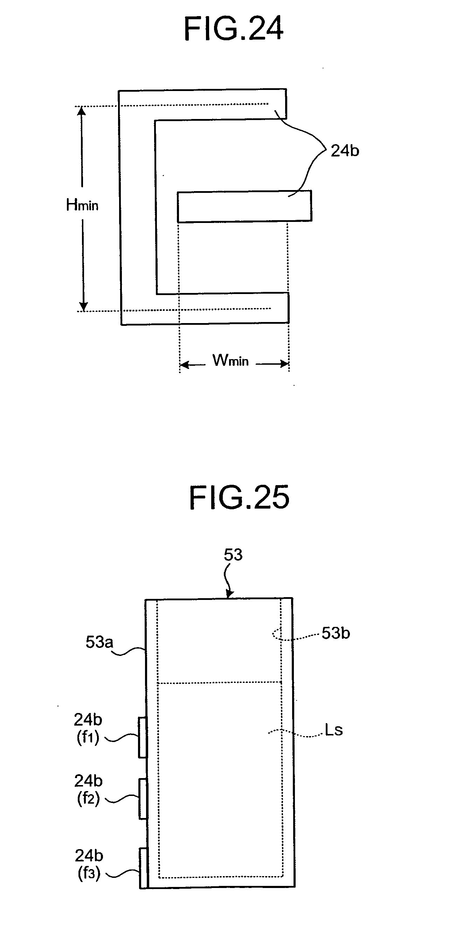

The transducer 24b should have one or more wavelength in order to generate an acoustic wave, and the acoustic wave is generated at the portion where the electrodes constituting the transducer 24b are overlapped with each other. Therefore, as shown in FIG. 24, the distance between the electrodes passing through the center of the electrode of the minimum unit is the minimum value Hmin (Hmin = λ) of the effective dimension in the vertical direction, and the distance in the horizontal direction of the overlapped electrodes is the minimum value (Wmin = λ/2) of the effective dimension in the horizontal direction.

When three surface acoustic wave devices 23 are used, the three surface acoustic wave devices 23 are arranged at the outer side face 53a of the reactor vessel 53 in the vertical direction as shown in FIG. 25, wherein the center frequencies f1 to f3 of the transducers 24b are set to be reduced in the vertical direction (f1 > f2 > f3). With this structure, the surface acoustic wave device 23 having the center frequency of f3 is provided at the lower part of the reactor vessel 53 as deviated with respect to the liquid sample. According to the formation of three acoustic wave devices 23, the reactor vessel 53 can move the component, which has a great specific gravity and therefore likely to sink, in the upward direction due to the acoustic wave having the low center frequency f3 and less attenuated in the liquid sample Ls, whereby the liquid sample Ls can be stirred.

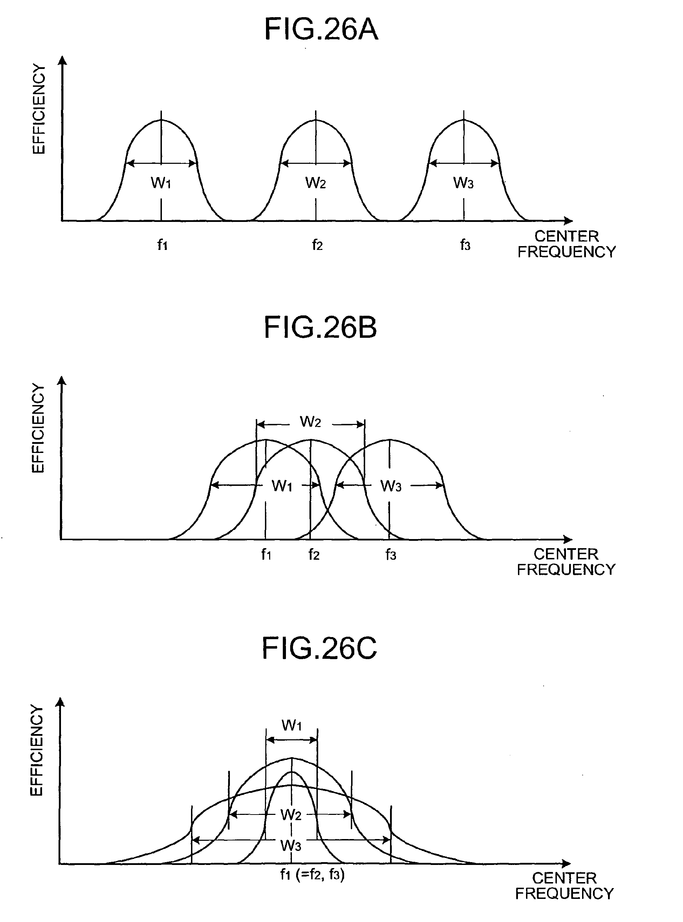

The three surface acoustic wave devices 23 have various modes of use. For example, as shown in FIG. 26A, the driving efficiencies are set to be the same, and the band widths are set to be the same (W1 = W2 = W3) although the center frequencies are different (f1 ≠ f2 ≠ f3). In this case, when the power of the center frequency f2 is simultaneously supplied to the three surface acoustic wave devices 23, only the surface acoustic wave device 23 having the center frequency f2 is operated to generate an acoustic wave, but the surface acoustic wave devices 23 having the center frequencies f1 and f3 are not operated.

As shown in FIG. 26B, the driving efficiencies of the three surface acoustic wave devices 23 are set to be the same, and the band widths thereof are set to be the same (W1 = W2 = W3) although the center frequencies are different (f1 ≠ f2 ≠ f3), wherein they are overlapped with one another within the band widths. In this case, when the power of the center frequency f2 is simultaneously supplied to the three surface acoustic wave devices 23, the surface acoustic wave device 23 having the center frequency f2 is driven with the most excellent driving efficiency, and the driving efficiency is reduced in the order of the surface acoustic wave device 23 having the center frequency f1 and the surface acoustic wave device 23 having the center frequency f3.

On the other hand, as shown in FIG. 26C, the driving efficiencies of the three surface acoustic wave devices 23 to the same power are set to be different from one another, the center frequencies f1 (= f2 = f3) are set to be the same, and the band widths are set to be different (W1 < W2 < W3). When the power of the center frequency f1 is simultaneously supplied to the three surface acoustic wave devices 23, the surface acoustic wave device 23 having the center frequency f2 is driven with the most excellent driving efficiency, and the driving efficiency is reduced in the order of the surface acoustic wave device 23 having the center frequency f1 and the surface acoustic wave device 23 having the center frequency f3. As described above, the three surface acoustic wave devices 23 can be used according to various stirring conditions. When plural surface acoustic wave devices 23 are used as described above, the surface acoustic wave devices 23 are set such that at least one of the center frequency, band width and resonance characteristic is different from one another.

The transducer 24b of the uppermost surface acoustic wave device 23, among the three surface acoustic wave devices 23, is provided as deviated between the position where the meniscus M of the liquid sample comes in contact with the inner side face 53b and the lowermost part of the meniscus M. When the reactor vessel 53 is made of a material having a high affinity to the retained liquid sample Ls, the transducer 24b formed as described above can promote the stirring of the liquid sample at the portion in the vicinity of the position where the meniscus M projecting downward comes in contact with the inner side face 53b.

In this case, the wavelength of the transducer 24b is set so as to satisfy the relationship described below in order to allow the generated acoustic wave to leak into the liquid sample Ls. Specifically, supposing that the dimension of the transducer 24b in the vertical direction is defined as Hd and the contact angle made by the meniscus M and the inner side face 53b is defined as $\theta$, the transducer 24b is set such that the wavelength λ of the emitted acoustic wave satisfies the relationship of λ < Hd·tanθ. By the setting described above, the transducer 24b can emit the generated acoustic wave in the liquid sample Ls, even if the apparent thickness of the liquid sample Ls at the portion where the liquid sample Ls comes in contact with the inner side face 53b is thin. In this case, the center frequency is set to be not less than 100 MHz in order to set the wavelength of the acoustic wave to the wavelength λ satisfying the relationship of λ < Hd·tanθ.

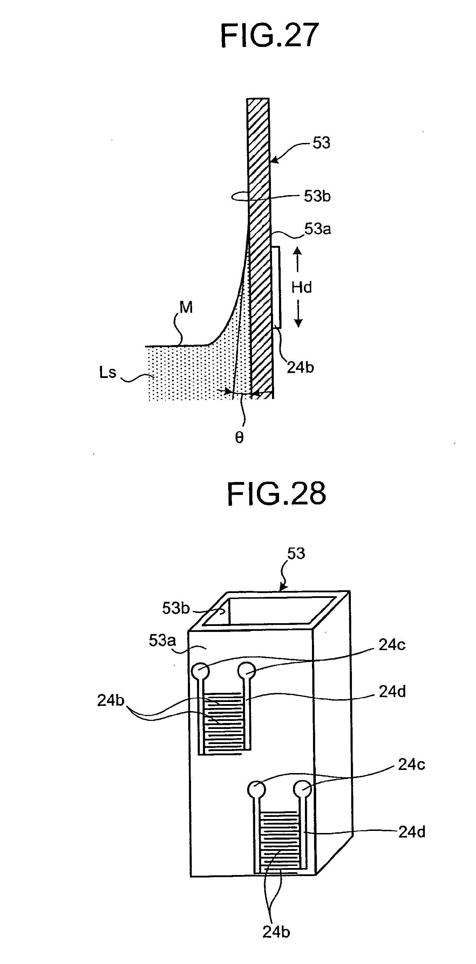

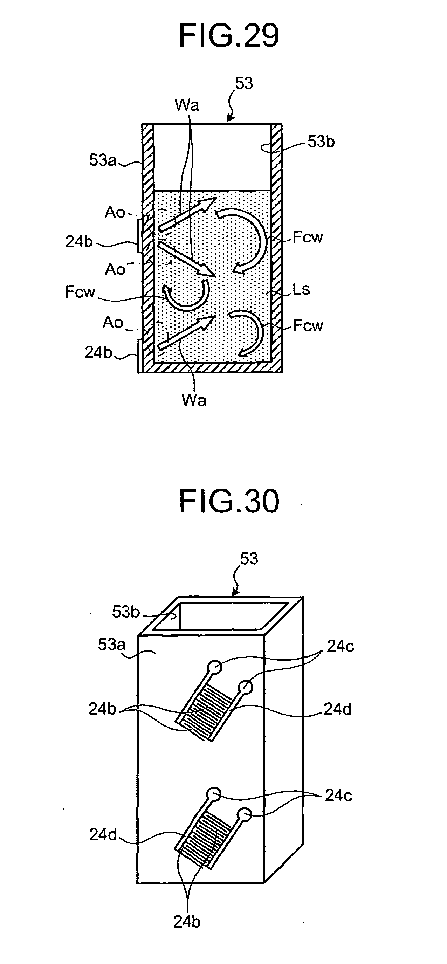

The reaction vessel 53 may be configured such that, as shown in FIG. 28, the two transducers 24b of the acoustic chips 24 are not arranged at the same outer side face 53b of the reactor vessel 53 on one line in the vertical direction, but are arranged as shifted in the horizontal direction. With this arrangement, in the reaction vessel 53, one of the two surface acoustic wave devices 23 is provided as deviated with respect to the liquid sample Ls, and both surface acoustic wave devices 23 are asymmetrically arranged with respect to the liquid sample Ls. Therefore, as shown in FIG. 29, the acoustic wave Wa produced by the transducers 24b leaks into the liquid sample Ls whose acoustic impedance is close to the acoustic wave Wa in the different three directions from different three emission areas Ao at the inner side face 53b of the reaction vessel 53. The acoustic wave Wa leaking in the different three directions asymmetrically produces three acoustic flows Fcw in the liquid sample Ls in the clockwise direction. The asymmetric three acoustic flows Fcw stir the liquid sample Ls in the reactor vessel 53 over a wide range from the bottom part to the gas/liquid interface.

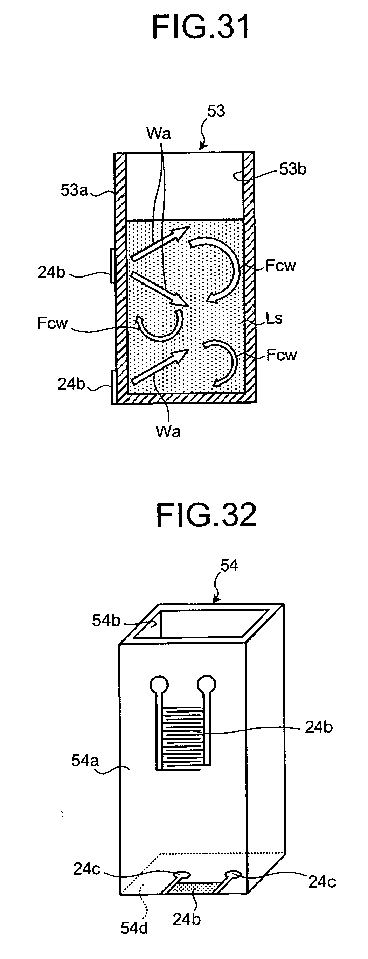

As shown in FIG. 30, the two transducers 24b of the acoustic chips 24 may be arranged at the outer side face 53a of the reactor vessel 53 in one line in the vertical direction as well as the plural electrodes constituting the transducers 24b may be tilted with respect to the vertical direction. Even by this arrangement, the three asymmetric acoustic flows Fcw in the clockwise direction generated by the acoustic wave Wa allow to stir the liquid sample Ls in the reactor vessel 53 over a wide range from the bottom part to the gas/liquid interface as shown in FIG. 31. In some drawings used for the explanation below, the transducer 24b of the surface acoustic wave device 23 may be simplified in which the acoustic matching layer 25 or the substrate 24a of the acoustic chip 24, etc. may be omitted.

On the other hand, two transducers 24b may be mounted to the different surfaces, like a reactor vessel 54 shown in FIG. 32, i.e., one of them may be provided at the upper part of an outer side face 54a of the reactor vessel 54 closer to the gas/liquid interface as deviated with respect to the liquid sample Ls, and the other may be provided at an outer bottom face 54d as deviated with respect to the liquid sample. With this arrangement, two surface acoustic wave devices 23 in the reaction vessel 54 are arranged so as to be asymmetric with respect to the liquid sample Ls. In this case, the end portion of the transducer 24b arranged at the outer side face 54a is positioned at the upper part closer to the gas/liquid interface in the vertical direction, the end portion of the transducer 24b provided to the outer bottom face 54d is positioned at the area Ap (see FIG. 7) outer than an inner side face 54b in the horizontal direction, and the electric terminal 24c is arranged in the inwardly horizontal direction.

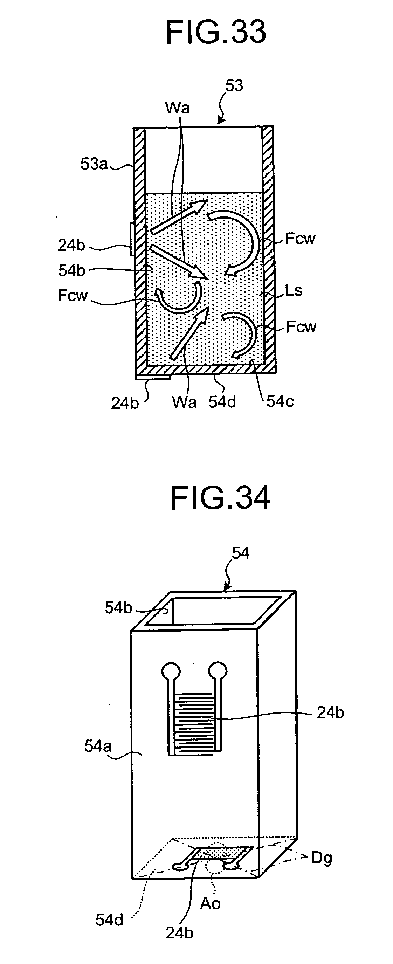

By arranging the two transducers 24b as described above, the acoustic wave Wa generated by the transducers 24b leaks in the liquid sample Ls in the reactor vessel 54 in the three different directions as shown in FIG. 33, whereby three acoustic flows Fcw in the clockwise direction are asymmetrically produced in the liquid sample Ls. Since the transducer 24b provided at the outer side face 54a is arranged at the upper part closer to the gas/liquid interface in the vertical direction, the gas/liquid interface is fluctuated by the effect of the acoustic radiation pressure. On the other hand, the transducer 24b provided at the outer bottom face 54d has a great effect of moving the liquid sample Ls, having the great specific gravity, in the upward direction. Therefore, when the reactor vessel 54 is made of a material having a high affinity to the liquid sample Ls, the flow enters the portion where the meniscus of the liquid sample Ls comes in contact with the inner side face 54b, whereby the liquid sample Ls is stirred over a wide range.

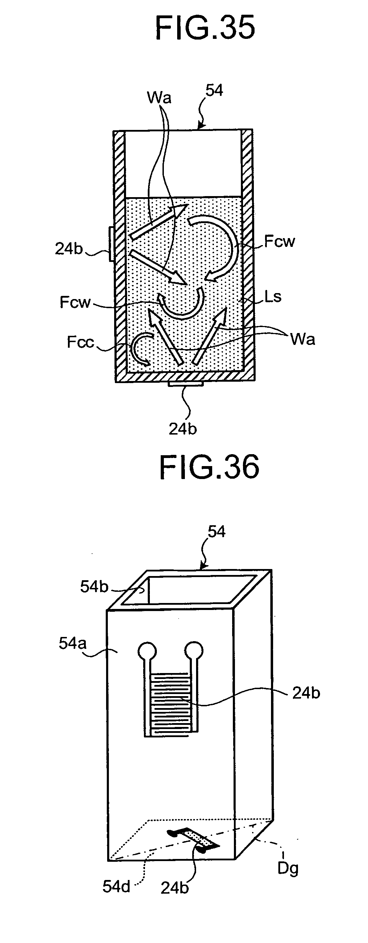

In the reactor vessel 54, the transducer 24b provided at the outer bottom face 54d is arranged on the diagonal lines Dg of the outer bottom face 54d, particularly on the intersection of the diagonal lines Dg as shown in FIG. 34. When the transducer 24b is arranged as described above, the emission area Ao is formed on the intersection of the diagonal lines Dg (see FIG. 34), so that the acoustic wave Wa leaks into the liquid sample Ls in four different directions as shown in FIG. 35. Since the acoustic flow Fcw, of the acoustic flows Fcw and Fcc asymmetrically produced by the acoustic wave Wa, generated by the transducer 24b provided at the outer side face 54a disturbs the acoustic flows Fcw and Fcc generated by the transducer 24b provided at the outer bottom face 54d, a complicated flow field (turbulent flow) is generated in the liquid sample Ls, whereby the liquid sample Ls in the reactor vessel 54 is more efficiently stirred.

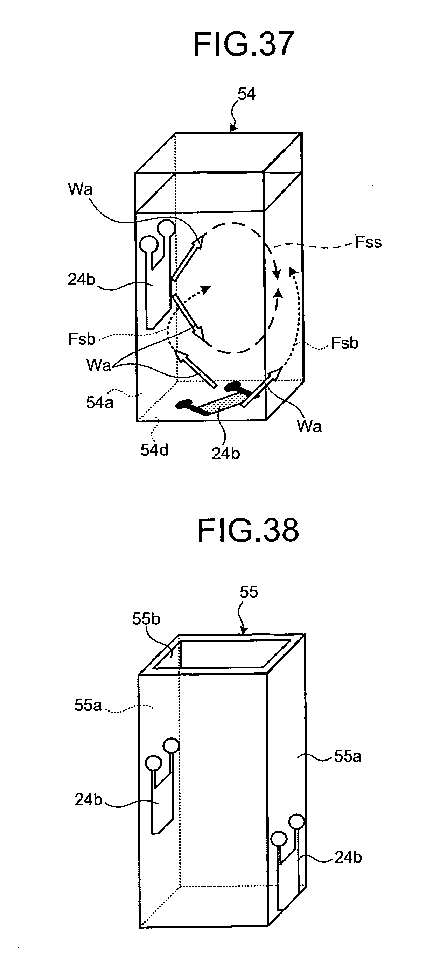

As shown in FIG. 36, the transducer 24b provided at the outer bottom face 54d of the reactor vessel 54 may be arranged in the direction of the diagonal line Dg of the outer bottom face 54d. Specifically, the transducer 24b is provided such that the plural electrodes constituting the transducer 24b are arranged along the direction of the diagonal line Dg. According to this arrangement, the acoustic wave leaks into the liquid sample in four different directions, so that acoustic flows are asymmetrically produced in the reaction vessel 54. Since, as shown in FIG. 37, an acoustic flow Fsb generated by the transducer 24b provided at the outer bottom face 54d of the reaction vessel 54 has an effect of moving the liquid sample Ls, which is likely to stay at the corner of the bottom and has a great specific gravity, in the upward direction, a complicated flow field (turbulent flow) is generated by the synergetic effect with an acoustic flow Fss generated by the transducer 24b provided at the outer side face 54a, whereby the liquid sample Ls can more efficiently be stirred.

On the other hand, two transducers 24b may be provided at the different faces, i.e., at opposing outer side faces 55a, like the reactor vessel 55 shown in FIG. 38. In this case, one of the transducers 24b is arranged at the center in the widthwise direction at the upper part of the reactor vessel 55 closer to the gas/liquid interface in the vertical direction, while the other is arranged at the lower part as deviated with respect to the liquid sample Ls. Specifically, the other transducer 24b is arranged at the center of the outer side face 55a in the widthwise direction, and the end portion thereof is located at the position lower than an inner bottom face 55c (see FIG. 3) in the vertical direction and at the area Ap (see FIG. 7) outer than an inner side face 55b in the horizontal direction.

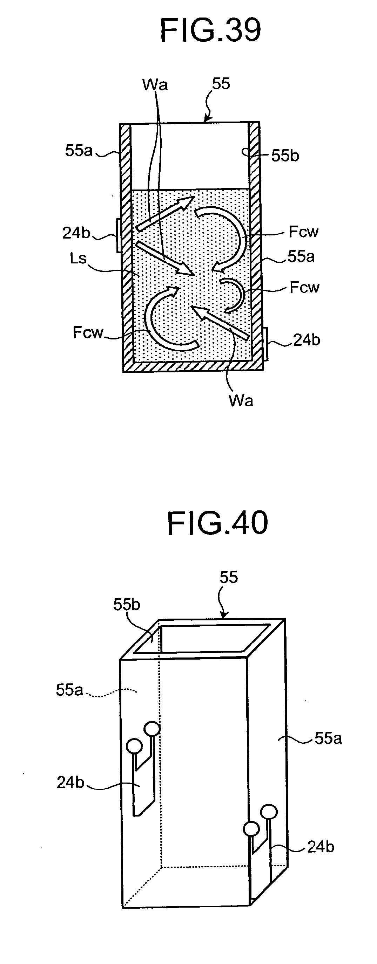

When the transducers 24b are arranged as described above, the acoustic wave Wa generated by the transducers 24b leaks into the liquid sample Ls in the reactor vessel 55 in three different directions indicated by arrows, whereby three acoustic flows Fcw are asymmetrically produced in the liquid sample Ls as shown in FIG. 39. Since one of the transducers 24b is provided at the upper part closer to the gas/liquid interface in the vertical direction, the gas/liquid interface is fluctuated by the effect of the acoustic radiation effect. Since the other transducer 24b is provided at the lower part in the vertical direction, it has a great effect of moving the liquid sample Ls, having a great specific gravity, in the upward direction. Therefore, when the reactor vessel 55 is made of a material having a high affinity to the liquid sample Ls, the flow enters the portion where the meniscus of the liquid sample Ls comes in contact with the inner side face 55b, whereby the liquid sample Ls is stirred over a wide range.

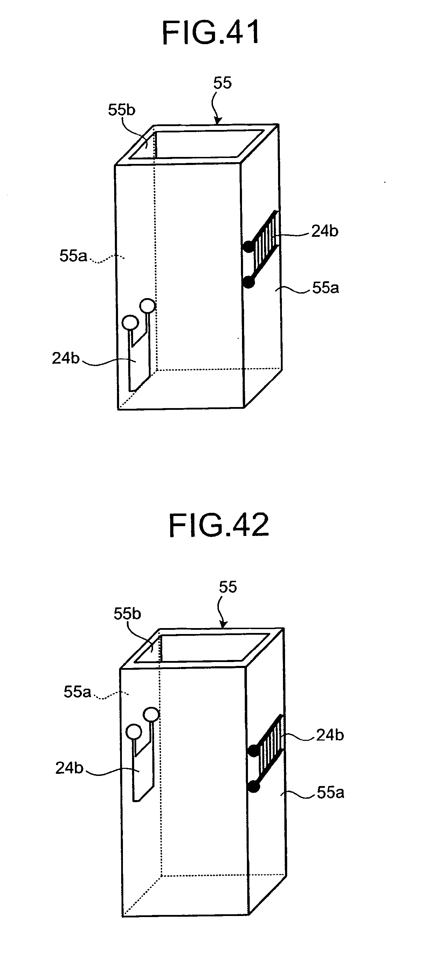

Two transducers 24b provided at the opposing outer side faces 55a of the reaction vessel 55 may be arranged as shown in FIGS. 40 to 42. In the reactor vessel 55 shown in FIG. 40, one of the transducers 24b is provided at the upper part of the outer side face 55a closer to the gas/liquid interface in the direction close to one side in the widthwise direction as deviated with respect to the liquid sample Ls, and the other is provided at the lower part of the outer side face 55a in the direction closer to the other side in the widthwise direction as deviated with respect to the liquid sample. With this arrangement, two surface acoustic wave devices 23 are arranged so as to be asymmetric with respect to the liquid sample Ls in the reaction vessel 55. In the reactor vessel 55 shown in FIG. 41, one of the transducers 24b is provided at the lower part of the outer side face 55a at the center thereof in the widthwise direction as deviated with respect to the liquid sample, while the other is provided at the upper part of the outer side face 55a in the vertical direction. In this case, one transducer 24b is provided such that the plural electrodes are arranged in the horizontal direction. In the reactor vessel 55 shown in FIG. 42, one transducer 24b is provided at the upper part of the outer side face 55a closer to the gas/liquid interface as deviated with respect to the liquid sample, while the other transducer 24b is arranged at the position of the outer side face 55a substantially corresponding to the one transducer 24b in the vertical direction with the plural electrodes arranged in the horizontal direction. With this arrangement, two surface acoustic wave devices 23 are arranged so as to be asymmetric with respect to the liquid sample Ls in the reactor vessel 55.

When the transducer 24b is arranged as described above, the reactor vessel 55 shown in FIG. 40 can produce a swiveling flow in the retained liquid, whereby high stirring efficiency can be achieved. Further, the transducer 24b arranged at the lower part in the vertical direction has an effect of moving the liquid sample Ls, which is likely to stay at the corner of the bottom and has a great specific gravity, in the upward direction. In the reactor vessel 55 shown in FIG. 41, the upper transducer 24b forms a flow to the retained liquid along the horizontal direction, so that the flow enters the portion where the meniscus of the liquid comes in contact with the inner side face 55b. The lower transducer 24b has an effect of moving the liquid sample Ls, which has the great specific gravity, in the upward direction. Therefore, in the reactor vessel 55 shown in FIG. 41, a complicated flow is produced as a whole, whereby high stirring efficiency can be achieved. On the other hand, in the reactor vessel 55 shown in FIG. 42, a complicated flow is generated to the entire liquid retained in the reactor vessel 55 by the synergetic effect of the transducer 24b generating the acoustic wave in the horizontal direction and the transducer 24b generating the acoustic wave in the vertical direction, whereby high stirring efficiency can be achieved.

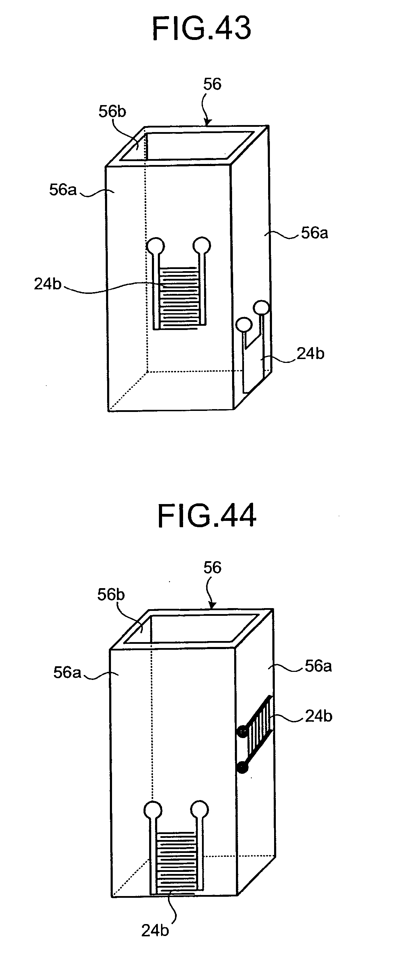

On the other hand, two transducers 24b may be provided at different outer side faces 56a, i.e., at the adjacent outer side faces 56a as shown in FIG. 43 or FIG. 44. In the reactor vessel 56 shown in FIG. 43, one transducer 24b is arranged at the center of the outer side face 56a in the widthwise direction at the upper part thereof closer to the gas/liquid interface, while the other transducer 24b is arranged at the lower part of the outer side face 56a at the center thereof in the widthwise direction as deviated with respect to the liquid sample. With this arrangement, two surface acoustic wave devices 23 are arranged so as to be asymmetric with respect to the liquid sample Ls in the reactor vessel 56 shown in FIG. 43. In the reactor vessel 56 shown in FIG. 44, one transducer 24b is provided at the lower part of the outer side face 56a as deviated with respect to the liquid sample, while the other transducer 24b is arranged at about the center of the outer side face 56a in the vertical direction with the plural electrodes arranged in the horizontal direction. With this arrangement, two surface acoustic wave devices 23 are arranged so as to be asymmetric with respect to the liquid sample Ls in the reactor vessel 56 shown in FIG. 44.

When the transducers 24b are arranged as described above, the acoustic wave generated by the transducers 24b leaks in the liquid sample in the three different directions, whereby three acoustic flows in the clockwise direction are asymmetrically produced in the liquid sample in the reactor vessel 56 shown in FIG. 43. Since one of two transducers 24b is arranged at the upper part closer to the gas/liquid interface in the vertical direction, the gas/liquid interface is fluctuated by the effect of the acoustic radiation pressure. Since the other transducer 24b is arranged at the lower part in the vertical direction, it has a great effect of moving the liquid sample, having a great specific gravity, in the upward direction. Therefore, when the reactor vessel 56 is made of a material having a high affinity to the liquid sample, the flow enters the portion where the meniscus of the liquid sample comes in contact with an inner side face 56b, whereby the liquid sample in the reactor vessel 56 is stirred over a wide range. In the reactor vessel 56 shown in FIG. 44, the acoustic wave generated by the transducer 24b leaks into the liquid sample in three different directions, whereby three acoustic flows in the clockwise direction are also asymmetrically produced in the liquid sample. Accordingly, the liquid sample can efficiently be stirred.

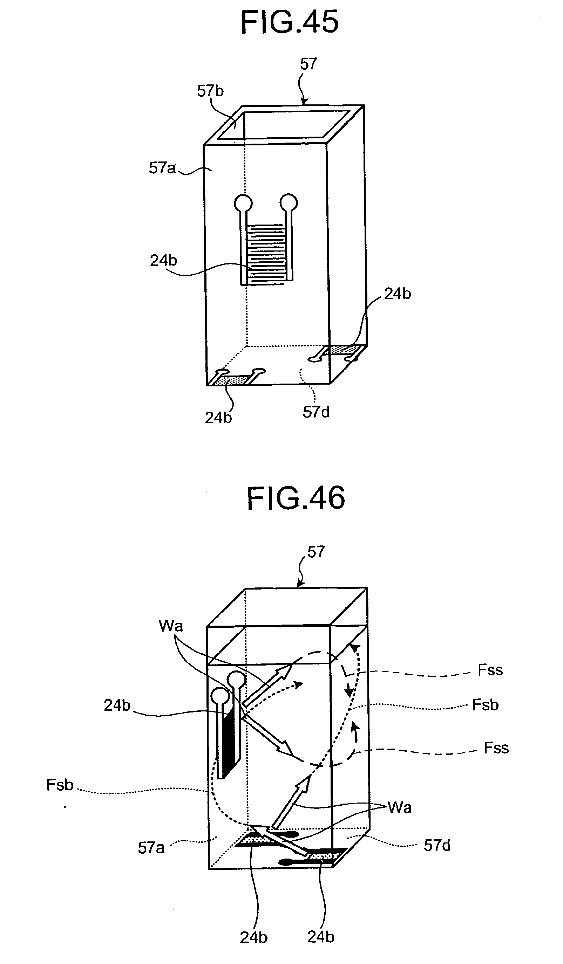

Like a reactor vessel 57 shown in FIG. 45, three transducers 24b may be provided at the different faces, i.e., one transducer 24b may be provided at an outer side face 57a and the other two may be provided at an outer bottom face 57d. In this case, the transducer 24b provided at the outer side face 57a is provided at the upper part closer to the gas/liquid interface in the vertical direction, while the other two transducers 24b provided at the outer bottom face 57d may be arranged at the opposing corners on the diagonal line as deviated with respect to the liquid sample.

When three transducers 24b are arranged as described above, the acoustic wave leaks in the liquid sample in the reactor vessel 57 in four different directions, so that the acoustic flows are asymmetrically produced. Since the acoustic flow Fsb generated by two transducers 24b provided at the outer bottom face 57d has an effect of moving the liquid sample Ls, which is likely to stay at the corner of the bottom and has a great specific gravity, in the upward direction, a complicated flow field (turbulent flow) is produced by the synergetic effect with the acoustic flow Fss generated by the transducer 24b provided at the outer side face 57a, whereby the liquid sample Ls in the reactor vessel 57 can more efficiently be stirred as shown in FIG. 46.

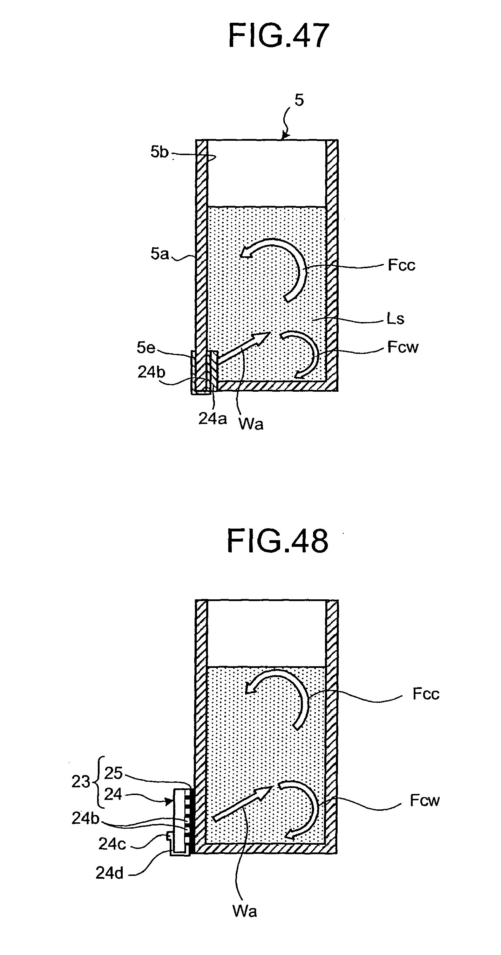

The acoustic wave generating means may be provided not at the outside of the vessel but at the inside of the vessel, like a reactor vessel 5 shown in FIG. 47, so long as at least one acoustic wave generating means is provided as deviated to the stirring vessel according to the present invention. In this case, the surface acoustic wave device 23 is mounted to the lower part of the inner wall face 5b with an adhesive such as epoxy resin with the transducer 24b facing the inner side face 5b. An extraction electrode 5e connected to the transducer 24b of the acoustic chip 24 for receiving power, which is transmitted from the transmitter 21, is provided to the reactor vessel 5.

In the stirring vessel according to the present invention, the surface acoustic wave device 23 may be provided to the reactor vessel 5 through the acoustic matching layer 25 with the plural electrodes constituting the transducer 24b of the surface acoustic wave device 23 directed toward the reactor vessel 5, as shown in FIG. 48. In this case, the acoustic chip 24 is configured such that the conductive circuit 24d is extracted to the backside of the surface acoustic wave device 23, wherein the power is fed to the electric terminal 24c provided at the backside.

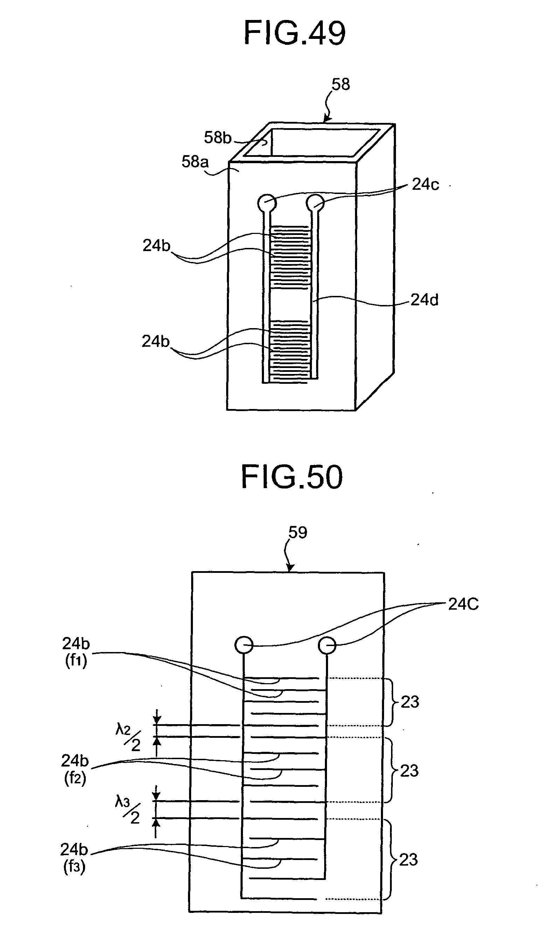

When plural surface acoustic wave devices 23 are present, a common electric terminal 24c, which serves as power receiving means for receiving power, may be provided to the stirring vessel according to the present invention, like reactor vessels 58 and 59 shown in FIGS. 49 and 50. In this case, the adjacent surface acoustic wave devices 23 are arranged such that the transducers 24b are arranged with a spaced distance of not less than a half wavelength ($\lambda/2$) in order that the produced acoustic flows are not canceled to each other. Therefore, in the reactor vessel 59, the transducers 24b, each having a different center frequency f1 to f3 (f1 > f2 > f3), of three surface acoustic wave devices 23, are arranged to be apart from one another with a half wavelength ($\lambda 2/2$, $\lambda 3/2$). The spaced distance of the adjacent surface acoustic wave devices 23 is determined with the wavelength of the surface acoustic wave device 23 having the longer wavelength defined as a reference. Accordingly, like the reactor vessel 53, the reactor vessel 59 has an effect that the component in the liquid sample, which is likely to sink down and has a great specific gravity, is moved in the upward direction by the acoustic wave that has the center frequency f3 and is less attenuated, whereby the reactor vessel 59 can stir the liquid sample.

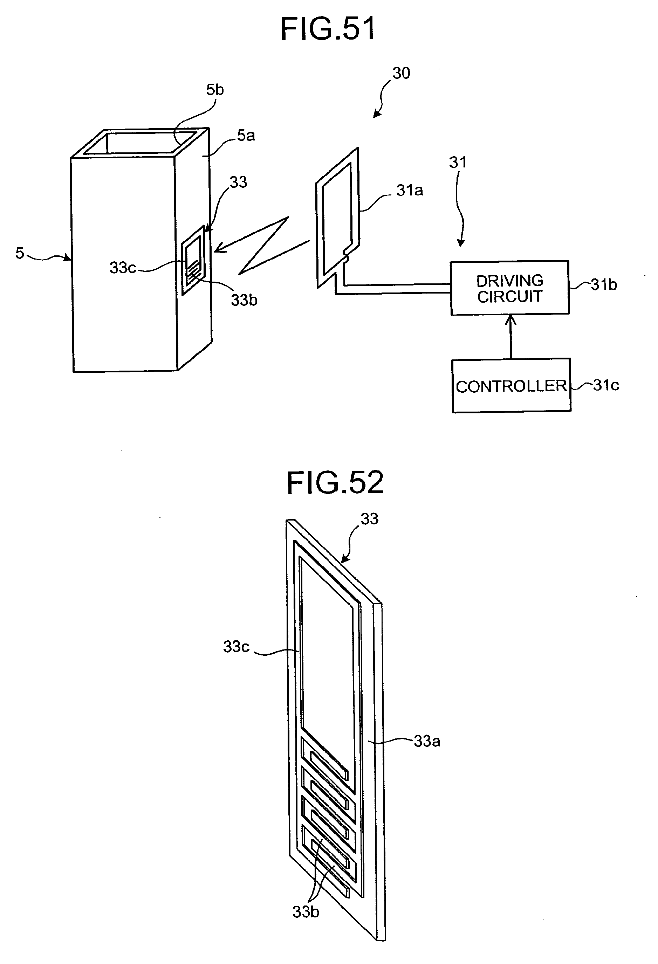

The stirring vessel according to the present invention employs the contactor 21a for transmitting power to the acoustic chip 24. However, as shown in FIG. 51, power can wirelessly be transmitted. A stirrer 30 used for the wireless transmission has a transmitter 31 and an acoustic chip 33, wherein the acoustic chip 33 is mounted to the reactor vessel 5, as shown in FIG. 51.

The transmitter 31 is arranged so as to be opposite to the acoustic chip 33, and has an RF transmission antenna 31a, a driving circuit 31b and a controller 31c. The transmitter 31 transmits, to the acoustic chip 33, the power supplied from a high-frequency AC power supply with about several MHz to several hundreds MHz from the RF transmission antenna 31a as an electric wave. When the transmitter 31 transmits the power to the acoustic chip 33, the arrangement determining member 22 adjusts the relative arrangement of the transmitter 31 in the circumferential direction and the radius direction with respect to the reaction table 4 in order that the RF transmission antenna 31a and the antenna 33c oppose to each other, whereby the relative arrangement is determined. The relative arrangement of the RF transmission antenna 31a and the antenna 33c are detected by, for example, providing a reflection sensor to the transmitter 31, and utilizing the reflection from a reflection member mounted to a specific portion of the reactor vessel 5 or the acoustic chip 33.

As shown in FIG. 52, the acoustic chip 33 is configured such that a transducer 33b composed of an inter digital transducer (IDT) is integrally mounted to the surface of the substrate 33a with the antenna 33c. The acoustic chip 33 is provided to the side wall 5a of the reactor vessel 5 through the acoustic matching layer made of epoxy resin or the like with the transducer 33b and the antenna 33c facing outwardly. In this case, plural inter digital transducers constituting the transducer 33b are arranged in the vertical direction in the acoustic chip 33 as shown in FIG. 51. The acoustic chip 33 receives the electric wave, transmitted from the transmitter 31, by the antenna 33c so as to generate a surface acoustic wave (ultrasonic wave) to the transducer 33b by the electromotive force generated by the resonance operation.

INDUSTRIAL APPLICABILITY

A stirring vessel according to the present invention has at least one acoustic wave generating means, which emits an acoustic wave in a liquid, provided to the stirring vessel as deviated. A stirring method according to the present invention includes a step of asymmetrically emitting an acoustic wave into a liquid, and a step of generating an asymmetric flow in the liquid by the asymmetric acoustic wave, wherein the liquid is stirred by the asymmetric flow. Therefore, the acoustic flow can arrive at the gas/liquid interface without being canceled, whereby the liquid is stirred over a wide range from a bottom part of the vessel to the gas/liquid interface. Therefore, the present invention is suitable for use in a stirring vessel, a stirring method, a stirrer and an analyzer provided with the stirrer.

**Claims**

1.  A stirring vessel for stirring a retained liquid by an acoustic wave, wherein
    at least one acoustic wave generating unit that emits an acoustic wave into the liquid is provided as deviated on the stirring vessel.

2.  The stirring vessel according to claim 1, wherein the acoustic wave generating unit includes an acoustic chip and an acoustic matching layer, wherein the acoustic chip produces a surface acoustic wave.

3.  The stirring vessel according to claim 1, wherein the acoustic wave generating unit emits the acoustic wave into the liquid from an emission area located at a vertical upper position or a vertical lower position of an inner side face of the stirring vessel or at a horizontal outer position of the inner bottom face.

4.  The stirring vessel according to claim 3, wherein the emission area is present on a same plane as the inner side face or the inner bottom face of the stirring vessel or a different plane.

5.  The stirring vessel according to claim 1, wherein an effective dimension of the acoustic wave generating unit in a horizontal direction or a vertical direction in a cross section passing through the acoustic wave generating unit in the horizontal direction or vertical direction is set to be not more than a half a dimension of the liquid present on the cross section.

6.  The stirring vessel according to claim 5, wherein an effective dimension of the acoustic wave generating unit in a cross section passing through the acoustic wave generating unit in a direction orthogonal to an acoustic wave generating direction is set to be not more than a third of a dimension of the liquid present on the cross section, and to be not less than a product of a half wavelength of the emitted acoustic wave and a number of the acoustic wave generating units.

7.  The stirring vessel according to claim 1, wherein two or more acoustic wave generating units are provided to the stirring vessel.

8.  The stirring vessel according to claim 7, wherein the two or more acoustic wave generating units are arranged to be asymmetric with respect to the liquid.

9.  The stirring vessel according to claim 7, wherein the two or more acoustic wave generating units emit an acoustic wave in different directions from odd or even numbers of emission areas.

10. The stirring vessel according to claim 9, wherein the odd or even numbers of emission areas are present on a same plane as an inner side face or an inner bottom face of the stirring vessel or different planes.

11. The stirring vessel according to claim 9, wherein the emission areas are present on a diagonal line or a diameter of an inner bottom face.

12. The stirring vessel according to claim 7, wherein the two or more acoustic wave generating units are provided on a same plane as a side face or a bottom face of the stirring vessel or on different planes.

13. The stirring vessel according to claim 7, wherein the two or more acoustic wave generating units are provided at different heights in a vertical direction on a plane same as a side face or a bottom face of the stirring vessel or on different planes.

14. The stirring vessel according to claim 13, wherein in the two or more acoustic wave generating units, a center frequency of the acoustic wave generating unit arranged at a lower part in the vertical direction is set to be lower than a center frequency of the acoustic wave generating unit arranged at an upper part in the vertical direction.

15. The stirring vessel according to claim 1, wherein the acoustic wave generating unit is provided at an outer face of the stirring vessel with an end portion thereof arranged at a position lower than an inner bottom face in a vertical direction and at a position outer than the inner side face in a horizontal direction.

16. The stirring vessel according to claim 7, wherein driving efficiencies, for a same signal, of the two or more acoustic wave generating units are set to be different from one another.

**17.** The stirring vessel according to claim 7, wherein the two or more acoustic wave generating units have a same driving efficiency and are driven by different signals.

**18.** The stirring vessel according to claim 16 or 17, wherein
the two or more acoustic wave generating units are set to be different in at least one of center frequency, band width, and resonance characteristic.

**19.** The stirring vessel according to claim 7, wherein in the two or more acoustic wave generating units, a spaced distance between the adjacent acoustic wave generating units is set to be not less than a half wavelength of a wavelength of the acoustic wave generating unit that produces an acoustic wave having a long wavelength.

**20.** The stirring vessel according to claim 7, wherein in the two or more acoustic wave generating units, a spaced distance between the adjacent acoustic wave generating units, which are simultaneously operated, in a direction along a surface on which the acoustic wave generating units are mounted is set to be not less than a sum of acoustic wave arrival distances of the respective acoustic wave generating units in a direction along the mounting surface.

**21.** The stirring vessel according to claim 7, wherein the two or more acoustic wave generating units have a common power receiving unit for receiving power.

**22.** The stirring vessel according to claim 1, wherein the acoustic wave generating unit is provided at a position in a vertical direction lower than a position where a gas/liquid interface of the liquid comes in contact with an inner side face of the stirring vessel.

**23.** The stirring vessel according to claim 7, wherein the acoustic wave generating unit, among the two or more acoustic wave generating units, provided between a position where a gas/liquid interface of the liquid comes in contact with an inner side face of the stirring vessel and a lowermost part of the gas/liquid interface is set to satisfy a relationship for a wavelength $\lambda$ of the emitted acoustic wave:

$$\lambda < Hd \cdot \tan\theta$$

where a dimension in a vertical direction is Hd, and a contact angle of the gas/liquid interface of the liquid and the inner side face of the stirring vessel is $\theta$.

**24.** The stirring vessel according to claim 23, wherein the acoustic wave generating unit has a center frequency of 100 MHz or more.

**25.** The stirring vessel according to claim 1, wherein the acoustic wave generating unit includes an acoustic chip and an acoustic matching layer.

**26.** The stirring vessel according to claim 25, wherein the acoustic chip has a piezoelectric substrate and an electrode.

**27.** The stirring vessel according to claim 26, wherein the electrode is an inter digital transducer.

**28.** The stirring vessel according to claim 27, wherein the acoustic wave generating unit is provided to the stirring vessel with plural electrodes constituting the inter digital transducer along a longitudinal direction of a mounting surface.

**29.** The stirring vessel according to claim 27, wherein the acoustic wave generating unit is provided to the stirring vessel with plural electrodes constituting the inter digital transducer along a vertical direction of a mounting surface.

**30.** The stirring vessel according to claim 1, wherein the acoustic wave generating unit has a center frequency of several MHz to 1 GHz.

**31.** The stirring vessel according to claim 25, wherein the acoustic chip is optically transparent.

**32.** The stirring vessel according to claim 26, wherein at least the piezoelectric substrate of the acoustic chip is optically transparent.

**33.** The stirring vessel according to claim 25, wherein the acoustic matching layer includes at least one of an adhesive, a liquid and a junction layer.

**34.** A stirring method for stirring a liquid with an acoustic wave, comprising the steps of:

asymmetrically emitting an acoustic wave into the liquid; and
generating an asymmetric flow in the liquid by the asymmetric acoustic wave, wherein
the liquid is stirred by the asymmetric flow.

**35.** A stirrer for stirring a liquid retained in the stirring vessel according to claim 1 with an acoustic wave, comprising:

a transmitting unit that transmits power to the acoustic wave generating unit provided on the stirring vessel; and
a power receiving unit that receives the power transmitted from the transmitting unit, wherein

an asymmetric acoustic wave emitted from one or plural acoustic wave generating units into the liquid generates an asymmetric flow in the liquid, and the liquid is stirred by the asymmetric flow.

36. An analyzer that stirs to react a liquid sample containing a specimen retained in a vessel and a reagent to analyze a reaction solution, the analyzer including the stirrer according to claim 35.

# FIG.1

EP 1 933 124 A1

| DISPLAY UNIT | CONTROL UNIT | INPUT UNIT |
|---|---|---|
| 17 | 15 | 16 |

# FIG.2

EP 1 933 124 A1

# FIG.3

# FIG.4

# FIG.5

# FIG.6

# FIG.7

# FIG.8

# FIG.9

# FIG.10

# FIG.11

24a 5

24

24b

Ls

25

5b

# FIG.12

24a 5

24

24b

Ls

25

5b

# FIG.13

# FIG.14

# FIG.15

52

52a    24b

23

# FIG.16

5

24    5a

24    5b

24a

24b

5d    5c

# FIG.17

5

5a

5b

24a

24b 24

# FIG.18

53

53b
53a

24c

24d

23

24b

24c

23

24b

24d

# FIG.19

# FIG.20

# FIG.21

# FIG.22

# FIG.23

## FIG.24

## FIG.25

## FIG.26A

## FIG.26B

## FIG.26C

# FIG.27

# FIG.28

# FIG.29

# FIG.30

# FIG.31

# FIG.32

# FIG.33

# FIG.34

# FIG.35

# FIG.36

# FIG.37

54

Wa

24b

Fsb

Wa

54a

54d    24b

Fss

Fsb

Wa

# FIG.38

55

55b

55a

55a

24b

24b

# FIG.39

# FIG.40

# FIG.41

# FIG.42

# FIG.43

# FIG.44

# FIG.45

# FIG.46

# FIG.47

# FIG.48

# FIG.49

# FIG.50

# FIG.51

DRIVING CIRCUIT ~31b

CONTROLLER ~31c

# FIG.52

# FIG.53

## INTERNATIONAL SEARCH REPORT

| International application No. |
|---|
| PCT/JP2005/018467 |

A. CLASSIFICATION OF SUBJECT MATTER
*G01N1/36*(2006.01), *G01N35/02*(2006.01), *B01F11/02*(2006.01)

According to International Patent Classification (IPC) or to both national classification and IPC

B. FIELDS SEARCHED

Minimum documentation searched (classification system followed by classification symbols)
*G01N1/00-44*(2006.01), *G01N35/00-37/00*(2006.01), *B01F11/02*(2006.01), *G01N21/03-15*(2006.01)

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br>Y<br>A | JP 2005-257406 A  (Olympus Corp.),<br>22 September, 2005 (22.09.05),<br>Full text; all drawings<br>& WO 2005/087359 A1 | 1-10,12,13,<br>15,17,21,22,<br>25-30,33-36<br>16,18,31,32<br>11,14,19,20,<br>23,24 |
| Y | JP 2005-099049 A  (Hitachi, Ltd.),<br>14 April, 2005 (14.04.05),<br>Par. No. [0039]<br>(Family: none) | 16,18 |
| Y | JP 2005-504623 A  (Advalytix AG.),<br>17 February, 2005 (17.02.05),<br>Par. Nos. [0027] to [0031]<br>& US 2004-0257906 A1    & EP 001420875 A1<br>& WO 2003/018181 A1 | 31,32 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>12 December, 2005 (12.12.05) | Date of mailing of the international search report<br>27 December, 2005 (27.12.05) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/018467 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X<br>A | JP 2003-033637 A  (Hitachi, Ltd.),<br>04 February, 2003 (04.02.03),<br>Full text; all drawings<br>(Family: none) | 34<br>1-33,35,36 |

Form PCT/ISA/210 (continuation of second sheet) (April 2005)

**INTERNATIONAL SEARCH REPORT**

International application No.

PCT/JP2005/018467

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
Document (JP 2005-257406 A) discloses an agitation vessel comprising a sonic wave generator for emitting sonic waves into a liquid, the sonic wave generator being provided eccentrically in the agitation vessel. Consequently, there is no technical relationship between the inventions of claims 1 and 2 and claims 3 and 4, 5 and 6, 7 to 14 and 16 to 20 and 23 and 24, 15, 22, 25 to 29 and 31 to 33 and 30 involving one or more of the same or corresponding special technical features, so that these inventions are not considered as being so linked as to form a single general inventive concept.
The inventions of claims 34, 35 and 36 do not have a constitution that
(continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable,
the    payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2005/018467 |

Continuation of Box No.III of continuation of first sheet(2)

"sonic wave generation means is provided eccentrically in the agitation vessel". Accordingly, there is no technical relationship between the inventions of claims 1 and 2 and the inventions of claims 34, 35 and 36 involving one or more of the same or corresponding special technical features, so that these inventions are not considered as being so linked as to form a single general inventive concept.

Form PCT/ISA/210 (extra sheet) (April 2005)

## EP 1 933 124 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DD 10325307